# EUROPEAN PATENT APPLICATION

(11) **EP 4 650 996 A1**
(43) Date of publication of application: **19.11.2025**
(21) Application number: 25725417.7
(22) Date of filing: 04.03.2025
(51) Int. Cl.: G06F 21/36, G06F 21/32, G06F 3/04817, H04L 9/08, G06F 21/60, G06F 21/62, G06F 21/55

(54) **ELECTRONIC DEVICE FOR DISPLAYING IMAGE AND OPERATION METHOD THEREOF**

(30) Priority: 19.03.2024 KR 20240038126; 12.07.2024 KR 20240092224
(71) Applicant: Samsung Electronics Co., Ltd, Suwon-si, Gyeonggi-do 16677 (KR)
(72) Inventor: LEE, Yongwan, Suwon-si, Gyeonggi-do 16677 (KR); KIM, Seongil, Suwon-si, Gyeonggi-do 16677 (KR); KIM, Inho, Suwon-si, Gyeonggi-do 16677 (KR); CHOI, Byoungkab, Suwon-si, Gyeonggi-do 16677 (KR)
(74) Representative: Gulde & Partner
(86) International application number: PCT/KR2025/099512
(87) International publication number: WO 2025/198412

(57) **Abstract**

An electronic device according to an embodiment may include a display, at least one processor and memory storing instructions. The electronic device may operate by executing the instructions. The electronic device may obtain, based on a user input received through an application to display the information, a character code array corresponding to information to be displayed in a view area through the display. The electronic device may divide the view area into a plurality of subareas according to a determined size of each of the plurality of the subareas. Each of the plurality of the subareas each may include areas for displaying a number of characters defined by the size. The electronic device may determine one or more character codes corresponding to the plurality of the subareas respectively based on the character code array. The electronic device may display characters in the view area based on one or more character codes corresponding to each of the plurality of the subareas divided according to the respective size determined for each of the plurality of the subareas. Besides, various embodiments are possible.

## Description

### [Technical Field]

The disclosure relates to an electronic device for displaying information and an operating method thereof.

### [Background Art]

Various types of an electronic device are used with development of digital technology. For example, a smartphone, a tablet personal computer (PC), a wearable device, and a desktop PC or a laptop PC are used. The electronic device may provide functionality of displaying information through a display device.

For example, the electronic device may provide a mobile identification document which may replace an offline physical identification document (e.g., a plastic identification document). The identification document may indicate a certificate for authenticating or identifying a user such as an identification document, a driver's license and/or a passport. To replace the plastic identification document, information for the identification may be displayed using the electronic device which may be carried by the user at all times.

The foregoing information may be provided as related art for the purpose of aiding understanding of the disclosure. No claim or determination is made as to whether any of the foregoing may be applied as the prior art in connection with the disclosure.

### [Disclosure of Invention]

### [Solution to Problem]

An electronic device according to an embodiment, may include a display, at least one processor and memory storing instructions. The instructions may, when executed by the at least one processor, cause the electronic device to, based on a user input received through an application to display the information, obtain a character code array corresponding to information to be displayed in a view area through the display. The instructions may, when executed by the at least one processor, cause the electronic device to divide the view area into a plurality of subareas according to a determined size of each of the plurality of the subareas. Each of the plurality of the subareas each may include areas for displaying a number of characters defined by the size. The instructions may, when executed by the at least one processor, cause the electronic device to determine one or more character codes corresponding to the plurality of the subareas respectively based on the character code array. The instructions may, when executed by the at least one processor, cause the electronic device to display characters in the view area based on one or more character codes corresponding to each of the plurality of the subareas divided according to the respective size determined for each of the plurality of the subareas.

An electronic device according to an embodiment, may include a display, at least one processor and memory for storing instructions. The instructions may, when executed by the at least one processor, cause the electronic device to acquire a character code array including information to be displayed in a view area on the display, through an application. The instructions may, when executed by the at least one processor, cause the electronic device to randomly determine a size for each of a plurality of subareas of the view area. The plurality of the subareas each may include areas for displaying a number, defined by the size, of characters. The instructions may, when executed by the at least one processor, cause the electronic device to divide and display a plurality of characters corresponding to the character code array in the plurality of the subareas.

An electronic device according to an embodiment, may include a display, at least one processor and memory for storing instructions. The instructions may, when executed by the at least one processor, cause the electronic device to, in response to a first user input, obtain first information relating to characters to be displayed in a view area on the display. The instructions may, when executed by the at least one processor, cause the electronic device to, based on the obtained first information, determine a plurality of subareas including a first subarea having a first size and a second subarea having a second size with respect to the view area. The instructions may, when executed by the at least one processor, cause the electronic device to, based on the obtained first information, display a first number of first characters corresponding to the first size among the characters in the first subarea. The instructions may, when executed by the at least one processor, cause the electronic device to, based on the obtained first information, display a second number of second characters corresponding to the second size among the characters in the second subarea. The instructions may, when executed by the at least one processor, cause the electronic device to, in response to a second user input, obtain second information of the characters to be displayed in the view area on the display. The instructions may, when executed by the at least one processor, cause the electronic device to, based on the obtained second information, determine a plurality of subareas including a third subarea having a third size different from the first size and a fourth subarea having a fourth size different from the second size with respect to the view area. The instructions may, when executed by the at least one processor, cause the electronic device to, based on the obtained second information, display a third number of characters corresponding to the third size among the characters in the third subarea. The instructions may, when executed by the at least one processor, cause the electronic device to, based on the obtained second information, display a fourth number of characters corresponding to the fourth size among the characters in the fourth subarea.

In an embodiment, an operating method of an electronic device may include, based on a user input received through an application to display information, acquiring a character code array corresponding to the information to be displayed on a view area through the display. The method may include dividing the view area into a plurality of subareas according to a determined size of each of the plurality of the subareas, each of the plurality of the subareas each for displaying a number of characters defined by the size. The method may include determining one or more character codes corresponding to the plurality of the subareas respectively based on the character code array. The method may include displaying characters in the view area based on one or more character codes corresponding to each of the plurality of the subareas divided according to the respective size determined for each of the plurality of the subareas.

In an embodiment, an operating method of an electronic device may include acquiring a character code array including information to be displayed in a view area through a display. The method may include randomly determining a size for each of a plurality of subareas of the view area. The plurality of the subareas each may be defined to display a number, defined by the size, of characters. The method may include dividing and displaying a plurality of characters corresponding to the character code array in the plurality of the subareas.

In an embodiment, a non-transitory computer readable recording medium may record a computer program. The computer program may cause, when executed, an electronic device to obtain a character code array including information to be displayed in a view area through a display. The computer program may cause, when executed, an electronic device to randomly determine a size for each of a plurality of subareas, the plurality of the subareas each configured to display a number of characters defined by the size, with respect to the view area. The computer program may cause, when executed, an electronic device to determine one or more character codes corresponding to the plurality of the subareas respectively based on the character code array. The computer program may cause, when executed, an electronic device to randomly determine an order of each of the subareas. The computer program may cause, when executed, an electronic device to display characters in the view area based on one or more character codes corresponding to the plurality of the subareas respectively provided to render in the order randomly determined.

In an embodiment, a non-transitory computer readable recording medium may record a computer program. The computer program may cause, when executed, an electronic device to obtain a character code array including information to be displayed in a view area through a display. The computer program may cause, when executed, an electronic device to randomly determine a size for each of a plurality of subareas of the view area. The plurality of the subareas each may be defined to display a number of characters defined by the size. The computer program may cause, when executed, an electronic device to distribute and display a plurality of characters corresponding to the character code array in the plurality of the subareas.

In an embodiment, an operating method of an electronic device may include, in response to a first user input, obtaining first information relating to characters to be displayed in a view area on a display. The method may include, based on the obtained first information, determining a plurality of subareas including a first subarea having a first size and a second subarea having a second size with respect to the view area. The method may include, based on the obtained first information, displaying a first number of first characters corresponding to the first size among the characters in the first subarea, and displaying a second number of second characters corresponding to the second size among the characters in the second subarea. The method may include, in response to a second user input, obtaining second information of the characters to be displayed in the view area on the display. The method may include, based on the obtained second information, determining a plurality of subareas including a third subarea having a third size different from the first size and a fourth subarea having a fourth size different from the second size with respect to the view area. The method may include, based on the obtained second information, displaying a third number of characters corresponding to the third size among the characters in the third subarea. The method may include, based on the obtained second information, displaying a fourth number of characters corresponding to the fourth size among the characters in the fourth subarea.

In an embodiment, a non-transitory computer readable recording medium may record a program executed by at least one processor, to cause an electronic device to perform the above method.

### [Brief Description of Drawings]

FIG. 1 is a block diagram of an electronic device in a networked environment, according to various embodiments.
FIG. 2 is a flowchart illustrating a process for an electronic device to display information in a view area according to an embodiment.
FIG. 3 illustrates an example of a screen including a view area displayed by an electronic device according to an embodiment.
FIG. 4 illustrates an example of an electronic device for determining subareas of a view area and an order for the subareas according to an embodiment.
FIG. 5 illustrates an example of an electronic device for displaying a screen including a view area based on determined subareas according to an embodiment.
FIG. 6 illustrates an example of information stored in memory as a result of displaying a view area based on determined subareas at an electronic device according to an embodiment.
FIG. 7 is a flowchart illustrating a process for an electronic device to obtain and display information to be displayed in a view area according to an embodiment.
FIG. 8 is a flowchart illustrating a process for an electronic device to display information in a view area based on a size of subareas according to an embodiment.
FIG. 9 is a flowchart illustrating a process for an electronic device to display information in response to a first user input and a second user input respectively according to an embodiment.
FIG. 10 is a flowchart illustrating a process for an electronic device to display information based on an image resource according to an embodiment.
FIG. 11 conceptually illustrates a method of an electronic device for displaying information based on an image resource according to an embodiment.
FIG. 12 is a flowchart illustrating a process for an electronic device to display information based on an image resource according to an embodiment.

### [Mode for the Invention]

Hereinafter, an embodiment is described in detail with reference to the accompanying drawings to facilitate practice by those having ordinary knowledge in the art of the disclosure. However, the disclosed embodiment may be implemented in many different forms, and is not limited to embodiments described herein.

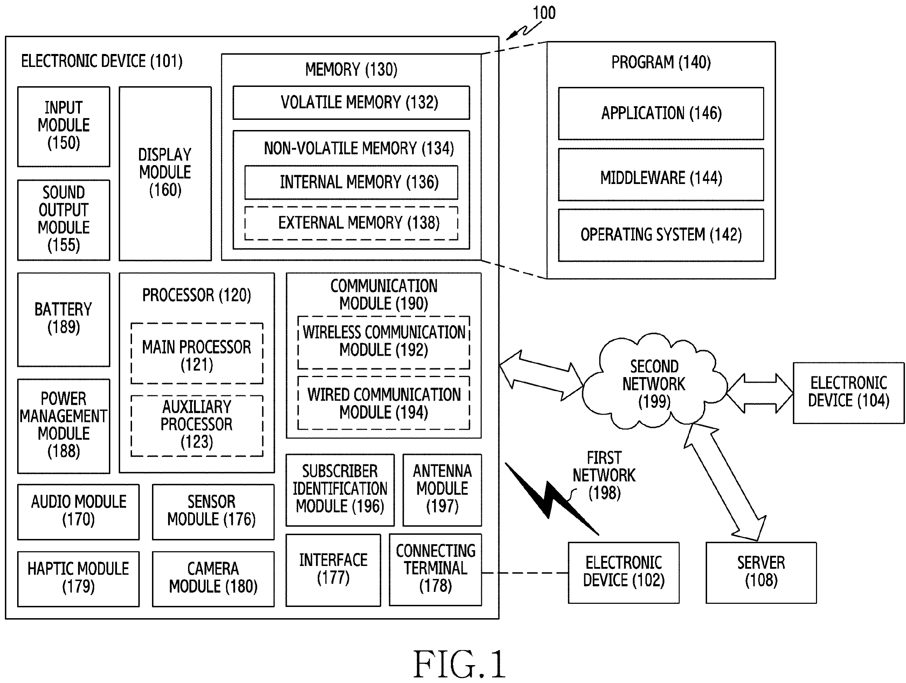

As an electronic device displays information in a view area of a screen, information indicating the information to be displayed in the view area may be stored in memory by an operation of a framework (e.g., middleware 144 of FIG. 1). The information stored in the memory may remain in the memory until an operating system of the electronic device organizes the memory, and if the information stored in the memory is leaked to outside, an attacker may steal the information stored in the memory.

An electronic device and an operating method thereof according to an embodiment may block an attacker from obtaining the information displayed on the electronic device even if the information stored in the memory is leaked.

The technical problems to be achieved in the disclosure are not limited to the technical problems mentioned above, and other technical problems not mentioned may be clearly understood by those skilled in the art of the technical field which the disclosure belongs to.

FIG. 1 is a block diagram of an electronic device 101 in a network environment 100, according to various embodiments. Referring to FIG. 1, the electronic device 101 in the network environment 100 may communicate with an electronic device 102 over a first network 198 (e.g., a short-range wireless communication network), or may communicate with at least one of an electronic device 104 or a server 108 over a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, an audio output module 155, a display module 160, an audio module 170, a sensor module 176, an interface 177, a connection terminal 178, a haptic module 179, a camera module 180, a power management module 188, a battery 189, a communication module 190, a subscriber identification module 196, or an antenna module 197. In some embodiment, at least one (e.g., the connection terminal 178) of the components may be omitted, or one or more other components may be added, in the electronic device 101. In some embodiment, some (e.g., the sensor module 176, the camera module 180, or the antenna module 197) of the components may be integrated as a single component (e.g., the display module 160).

The processor 120 may, for example, execute software (e.g., a program 140) to thus control at least one other component (e.g., a hardware or software component) of the electronic device 101 connected to the processor 120, and perform various data processing or computations. According to an embodiment, as at least a part of the data processing or computation, the processor 120 may store a command or data received from other component (e.g., the sensor module 176 or the communication module 190) in a volatile memory 132, process the command or the data stored in the volatile memory 132, and store result data in a non-volatile memory 134. According to an embodiment, the processor 120 may include a main processor 121 (e.g., a central processing device or an application processor) and an auxiliary processor 123 (e.g., a graphics processing device, a neural processing unit (NPU), an image signal processor, a sensor hub processor, or a communication processor) for operating independently from or in conjunction with it. For example, if the electronic device 101 includes the main processor 121 and the auxiliary processor 123, the auxiliary processor 123 may be configured to use less power than the main processor 121, or to be specific to a designated function. The auxiliary processor 123 may be implemented separately from, or as a part of the main processor 121.

The auxiliary processor 123 may control at least some of functions or states related to at least one component (e.g., the display module 160, the sensor module 176, or the communication module 190) of the components of the electronic device 101, for example, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signaling processor or a communication processor) may be implemented as a part of other component (e.g., the camera module 180 or the communication module 190) functionally related. According to an embodiment, the auxiliary processor 123 (e.g., the NPU) may include a hardware structure specified for artificial intelligence model processing. An artificial intelligence model may be generated through machine learning. Such learning may be conducted, for example, by the electronic device 101 where the artificial intelligence is performed, or via a separate server (e.g., the server 108). A learning algorithm may include, but not limited to, for example, supervised learning, unsupervised learning, semi-supervised learning or reinforcement learning. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more of them, but is not limited thereto. The artificial intelligence model may, additionally or alternatively, include a software structure, besides the hardware structure.

The memory 130 may store various data used by at least one component (e.g., the processor 120 or the sensor module 176) of the electronic device 101. The data may include, for example, software (e.g., the program 140), and input data or output data for a command related thereto. The memory 130 may include the volatile memory 132 or the non-volatile memory 134.

The program 140 may be stored as software in the memory 130, and may include, for example, an operating system 142, middleware 144 or an application 146.

The input module 150 may receive a command or data to be used by the component (e.g., the processor 120) of the electronic device 101 from the outside (e.g., the user) of the electronic device 101. The input module 150 may include, for example, a microphone, a mouse, a keyboard, a key (e.g., a button), or a digital pen (e.g., a stylus pen).

The audio output module 155 may output a sound signal to the outside of the electronic device 101. The audio output module 155 may include, for example, a speaker or a receiver. The speaker may be used for a general purpose such as multimedia playing or record playing. The receiver may be used to receive an incoming call. According to an embodiment, the receiver may be implemented separately from, or as a part of the speaker.

The display module 160 may visually provide information to the outside (e.g., the user) of the electronic device 101. The display module 160 may include, for example, a display, a hologram device, or a projector and control circuitry for controlling a corresponding device. According to an embodiment, the display module 160 may include a touch sensor configured to detect a touch, or a pressure sensor configured to measure an intensity of force generated by the touch.

The audio module 170 may convert a sound into an electrical signal, or convert an electrical signal into a sound. According to an embodiment, the audio module 170 may obtain the sound via the input module 150, or output the sound through the audio output module 155, or an external electronic device (e.g., the electronic device 102) (e.g., a speaker or a headphone) directly or wirelessly connected with the electronic device 101.

The sensor module 176 may detect an operation state (e.g., a power or a temperature) of the electronic device 101, or an external environment state (e.g., a user state), and generate an electrical signal or a data value corresponding to the detected state. According to an embodiment, the sensor module 176 may include, for example, a gesture sensor, a gyro sensor, a barometric sensor, a magnetic sensor, an acceleration sensor, a grip sensor, a proximity sensor, a color sensor, an infrared (IR) sensor, a biosensor, a temperature sensor, a humidity sensor, or an illuminance sensor.

The interface 177 may support one or more designated protocols to be used for the electronic device 101 to connect with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector for physically connecting the electronic device 101 to the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a motion) or an electrical stimulus which may be recognized by the user through tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least a part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable or a fuel cell.

The communication module 190 may support establishment of a direct (e.g., wired) communication channel or a wireless communication channel between the electronic device 101 and the external electronic device (e.g., the electronic device 102, the electronic device 104, or the server 108), and communication over the established communication channel. The communication module 190 may include one or more communication processors which are operated independently from the processor 120 (e.g., the application processor), and supports the direct (e.g., wired) communication or the wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication module). A corresponding communication module among these communication modules may communicate with the external electronic device via the first network 198 (e.g., a short-range communication network such as Bluetooth, wireless-fidelity (Wi-Fi) direct, or infrared data association (IrDA)) or the second network 199 (e.g., a long-range communication network such as a legacy cellular network, a 5th (5G) network, a next-generation communication network, Internet, or a computer network (e.g., a LAN or a wide area network (WAN)). These various communication modules may be integrated as a single component (e.g., a single chip), or may be implemented as a plurality of separate components (e.g., multiple chips). The wireless communication module 192 may identify and authenticate the electronic device 101 in the communication network such as the first network 198 or the second network 199 using subscriber information (e.g., international mobile subscriber identity (IMSI)) stored in the subscriber identification module 196.

The wireless communication module 192 may support a 5G network after a 4G network and a next-generation communication technology, for example, a new radio (NR) access technology. The NR access technology may support high-speed transmission of high-capacity data (enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a millimeter wave (mmWave) band), to achieve, for example, a high data transmission rate. The wireless communication module 192 may support various technologies for securing performance in the high-frequency band, for example, beamforming, massive multiple-input and multiple-output (MIMO), full-dimensional multiple-input and multiple-output (FD-MIMO), an array antenna, analog beamforming, or a large scale antenna. The wireless communication module 192 may support various requirements specified in the electronic device 101, the external electronic device (e.g., the electronic device 104), or a network system (e.g., the second network 199). According to an embodiment, the wireless communication module 192 may support a peak data rate for realizing the eMBB (e.g., 20 Gbps or more), loss coverage for realizing the mMTC (e.g., 164 dB or less), or U-plane latency for realizing the URLLC (e.g., 0.5 ms or less for each of downlink (DL) and uplink (UL), or 1 ms or less for round trip).

The antenna module 197 may transmit or receive a signal or the power to or from the outside (e.g., an external electronic device). According to an embodiment, the antenna module 197 may include an antenna including a radiator including a conductive material or a conductive pattern formed on a substrate (e.g., a printed circuit board (PCB)). According to an embodiment, the antenna module 197 may include a plurality of antennas (e.g., array antennas). In this case, at least one antenna appropriate for a communication scheme used in the communication network such as the first network 198 or the second network 199 may be selected, for example, by the communication module 190 from the plurality of the antennas. The signal or the power may be transmitted or received between the communication module 190 and the external electronic device via the at least one antenna selected. According to some embodiment, other component (e.g., a radio frequency integrated circuit (RFIC)) than the radiator may be additionally formed as a part of the antenna module 197.

According to various embodiments, the antenna module 197 may form an mmWave antenna module. According to an embodiment, the mmWave antenna module may include a printed circuit board, an RFIC disposed on or adjacent to a first surface (e.g., a bottom surface) of the printed circuit board and supporting a designated high frequency band (e.g., the mmWave band), and a plurality of antennas (e.g., array antennas) disposed on or adjacent to a second surface (e.g., a top surface or a side surface) of the printed circuit board and transmitting or receiving signals of the designated high frequency band.

At least some of the components may be interconnected and exchange signals (e.g., commands or data) therebetween through an inter-peripheral communication scheme (e.g., a bus, general purpose input and output (GPIO), serial peripheral interface (SPI), or mobile industry processor interface (MIPI)).

According to an embodiment, a command or data may be transmitted or received between the electronic device 101 and the external electronic device 104 via the server 108 connected to the second network 199. The external electronic device 102 or 104 may be a device of the same or different type as or from the electronic device 101. According to an embodiment, all or some of operations executed at the electronic device 101 may be carried out at one or more of the external electronic devices 102, 104, or 108. For example, if the electronic device 101 needs to perform a function or a service automatically, or in response to a request from the user or other device, the electronic device 101 may request the one or more external electronic devices to perform at least a part of the function or the service, instead of or in addition to executing the function or the service. The one or more external electronic devices receiving the request may perform at least a part of the function or the service requested, or an additional function or service related to the request, and provide a result of the execution to the electronic device 101. The electronic device 101 may provide the result as at least a part of a response to the request, without or with further processing of the result. For doing so, for example, cloud computing, distributed computing, mobile edge computing (MEC), or client-server computing technology may be used. The electronic device 101 may provide an ultra-low delay service using, for example, the distributed computing or the MEC. In an embodiment, the external electronic device 104 may include an Internet of things (IoT) device. The server 108 may be an intelligent server using machine learning and/or a neural network. According to an embodiment, the external electronic device 104 or the server 108 may be included in the second network 199. The electronic device 101 may be applied to an intelligent service (e.g., smart home, smart city, smart car, or healthcare) based on a 5G communication technology and an loT-related technology.

The electronic device according to various embodiments disclosed in this document may be a device of various types. The electronic device may include, for example, a portable communication device (e.g., a smartphone), a computer device, a portable multimedia device, a portable medical device, a camera, a wearable device, or a home appliance. The electronic device according to an embodiment of the disclosure is not limited to the devices described above.

It should be appreciated that various embodiments of the disclosure and the terms used therein are not intended to limit technological features disclosed in this document to particular embodiments, and embrace various modifications, equivalents, or alternatives of a corresponding embodiment. With respect to the description of the drawings, similar reference numerals may be used for similar or related elements. A singular form of a noun corresponding to an item may include one or more of the items, unless the relevant context clearly indicates otherwise. As used herein, phrases such as "A or B", "at least one of A and B", "at least one of A or B", "A, B, or C", "at least one of A, B, and C", and "at least one of A, B, or C" each may include one, or all possible combinations of the items enumerated together in a corresponding one of the phrases. Such terms as "1st" and "2nd", or "first" and "second" may be used to simply distinguish a corresponding component from another corresponding component, and do not limit the corresponding components in other aspect (e.g., importance or order). If an element (e.g., a first element) is referred to, with or without the term "operatively" or "communicatively", as "coupled" or "connected" to another element (e.g., a second element), it indicates that the element may be coupled with the other element directly (e.g., wiredly), wirelessly, or via a third element.

The term "module" used in various embodiments of the disclosure may include a unit implemented in hardware, software or firmware, and may be interchangeably used with a term, for example, logic, a logic block, a part, or circuitry. The module may be a single integral component, or a minimum unit or part thereof, for performing one or more functions. For example, according to an embodiment, the module may be implemented in a form of an application-specific integrated circuit (ASIC).

Various embodiments of the disclosure may be implemented as software (e.g., the program 140) including one or more instructions which are stored in a storage medium (e.g., the internal memory 136 or the external memory 138) readable by a machine (e.g., the electronic device 101). For example, a processor (e.g., the processor 120) of the machine (e.g., the electronic device 101) may invoke at least one of the one or more instructions stored in the storage medium, and execute it or them. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, 'non-transitory' simply indicates that the storage medium is a tangible device, and does not include a signal (e.g., an electromagnetic wave), but this term does not differentiate between a case where data is semi-permanently stored in the storage medium and a case where the data is temporarily stored.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or may be distributed (e.g., downloaded or uploaded) directly or online via an application store (e.g., Play Store^{™}) or between two user devices (e.g., smart phones). If distributed online, at least part of the computer program product may be temporarily stored in the machine-readable storage medium such as memory of a manufacturer's server, an application store server, or a relay server, or may be temporarily generated.

According to various embodiments, each component (e.g., a module or a program) of the above-described components may include a single entity or multiple entities, and some of the multiple entities may be separately deployed in different components. According to various embodiments, one or more component or operations of the above-described components may be omitted, or one or more other components or operations may be added. Alternatively or additionally, a plurality of components (e.g., modules or programs) may be integrated as a single component. In this case, the integrated component may perform one or more functions of each component of the plurality of the components in the same or similar manner as they are performed by a corresponding component of the plurality of the components before the integration. According to various embodiments, operations performed by the module, the program or other component may be carried out sequentially, in parallel, repeatedly, or heuristically, one or more of the operations may be executed in a different order or omitted, or one or more other operations may be added.

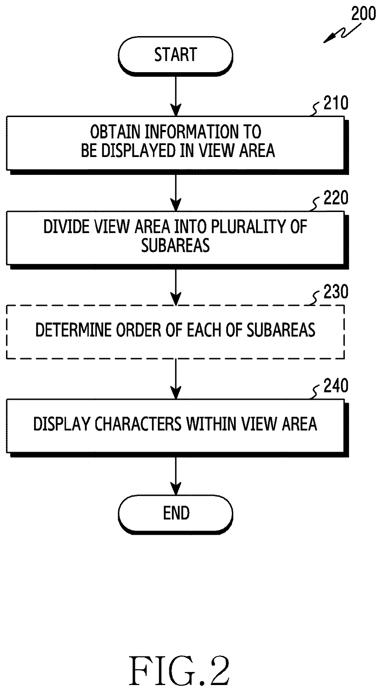

FIG. 2 is a flowchart 200 illustrating a process for an electronic device (e.g., the electronic device 101 of FIG. 1) to display information in a view area according to an embodiment. In the disclosure, it may be understood that operations of the electronic device are carried out by executing instructions stored in memory (e.g., the memory 130 of FIG. 1) by at least one processor (e.g., the processor 120 of FIG. 1) of the electronic device.

According to an embodiment, in operation 210, the electronic device may obtain information to be displayed in the view area. The electronic device may obtain the information to be displayed in the view area in response to a user input. This feature may adapt the displayed content to specific user needs. Further, it may ensure that the device responds dynamically to input, enabling personalized or context-specific display configurations. It may also minimize unnecessary processing by targeting only the required data. For example, while the electronic device executes an application which provides a mobile identification function, the electronic device may obtain information to be displayed in the view area in response to a touch input to an identification display icon displayed through a touchscreen (e.g., the display module 160 of FIG. 1) of the electronic device. In an embodiment, the electronic device may obtain the information stored in the memory of the electronic device, or may obtain the information from an external device (e.g., the electronic device 102, the electronic device 104, the server 108 of FIG. 1).

In the disclosure, the view area may indicate an area configured to display information of a designated type within a screen to be displayed on the display. For example, the view area may indicate an area configured display an identification number within the screen displaying a mobile identification document. In the disclosure, it is described that the information displayed within the view area is displayed in the form of characters to ease the explanation, but the information displayed in the view area may have other identifiable form.

In an embodiment, the electronic device may obtain a character code array corresponding to the characters to be displayed in the view area. The character code array may include character codes corresponding to characters respectively. The character code may indicate representation of characters in a code recognizable by the electronic device. For example, the character code may include a code representing characters in hexadecimal numbers.

In an embodiment, the information to be displayed in the view area may include information designated as a target to secure. For example, if the view area is an area displaying personal information of the user, the information to be displayed in the view area may be designated as a secure target. In an embodiment, if the information to be displayed in the view area is not a secure target, the electronic device may configure the view area as a single area and display characters within the view area.

According to an embodiment, in operation 220, the electronic device may determine a for a plurality of subareas of the view area. The electronic device may divide the view area into a plurality of subareas based on the determined size for each of the plurality of the subareas. This feature may optimize the layout of the display by segmenting the view area into subareas tailored to the content size. Further, it may ensure efficient use of display space and provides a structured arrangement, particularly beneficial for displaying complex or sensitive data securely. The size of the subareas may correspond to an amount of the information to be displayed in the subareas respectively. For example, if the information to be displayed in the view area is represented by characters, the size of the subarea may correspond to the number of characters to be displayed in the subarea. For example, if the information to be displayed in the view area is represented as images, the size of the subarea may correspond to the number of images to be displayed in the subarea. For example, the size of the subarea may correspond to an area of the subarea. For example, the size of each subarea may fall within a predefined range, such as between 5% and 50% of the total view area. For example, the size ratios between subareas may be defined, for example, such that the largest subarea is no more than twice the size of the smallest subarea. These ranges ensure efficient allocation of display space while accommodating various content sizes. The electronic device may determine the information (e.g., one or more character codes) to be displayed in each subarea based on the determined size of the subareas.

In an embodiment, the size of each of the subareas may be determined at random. For example, the electronic device may determine a value determined based on a pseudorandom number algorithm which randomly determines a value, as the size of the subarea. For example, the electronic device may determine the size of each of the subareas based on a pattern determined from a plurality of patterns defining the sizes of the subareas. For example, the subareas may include a first subarea and a second subarea having a different size from the first subarea. The first subarea may display a first number of characters (at least one character), and the second subarea may display a second number of characters (at least one character) different from the first number.

According to an embodiment, in operation 230, the electronic device may determine an order of each of the subareas. For example, the electronic device may randomly determine the order of the subareas. For example, the electronic device may determine the order of the subareas based on one pattern randomly selected from a plurality of predefined patterns. The order of the subareas may be an order of rendering the subareas to display them on the display. In an embodiment, operation 230 may be omitted.

According to an embodiment, in operation 240, the electronic device may display characters within the view area based on one or more character codes corresponding to the plurality of the subareas respectively divided according to the determined size for each of the plurality of the subareas. Assigning character codes to subareas based on their size enables precise rendering of characters by matching their allocation to the defined subareas. This ensures that characters are displayed within the boundaries of their respective subareas, reducing errors and enhancing visual clarity. Furthermore, displaying characters in Subareas based on the determined sizes implements the structured and segmented display functionality, providing a secure and user-friendly interface. This feature is particularly advantageous for applications presenting data requiring security, such as secure identification documents. The electronic device may display information (e.g., characters) in the view area in the determined order. The electronic device may allocate data corresponding to the subareas in the determined order to the memory to allow a framework to display the information. Hence, each time the electronic device displays information within the view area, the information displayed within the view area may be the same but the data allocated to the memory may be stored differently depending on the size and the order of the subareas.

According to an embodiment, the electronic device may provide various functions allowing an application to use functions or information provided from one or more resources, through the framework (e.g., the middleware 144 of FIG. 1). The framework may include, for example, a view system, a window manager, a resource manager, a database manager, a graphic manager, and/or a security manager.

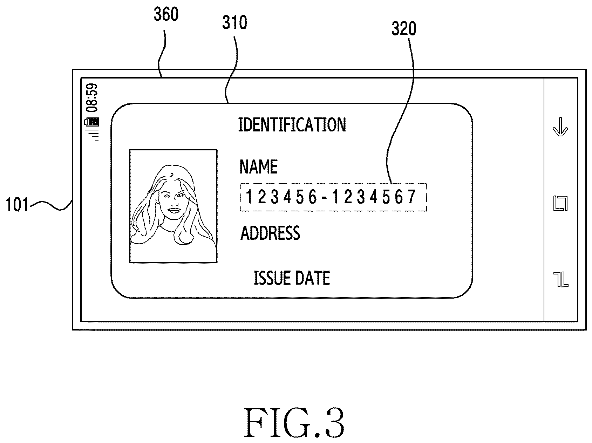

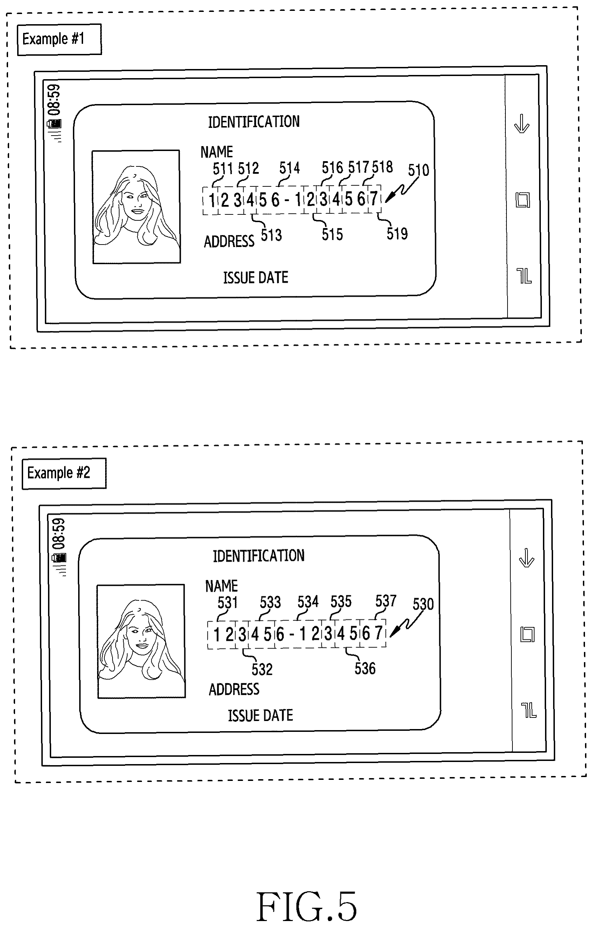

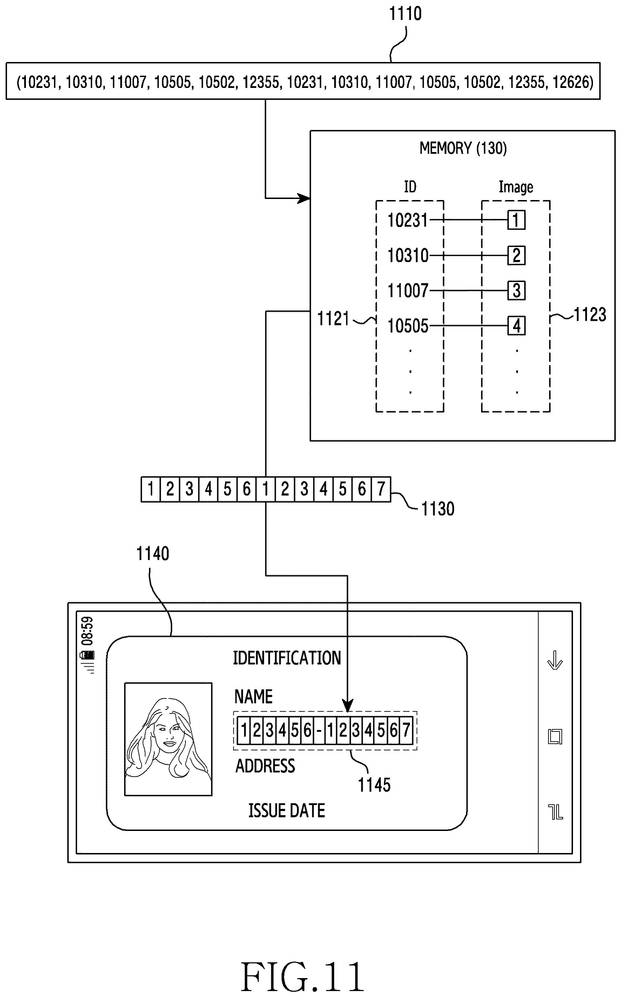

The view system may manage, for example, at least one object (e.g., a button, an icon, a list, a grid, a textbox) presented on the display and a user interface view (e.g., a view area 320 of FIG. 3, a view area 510 and a view area 530 of FIG. 5, a view area 1145 of FIG. 11). The window manager may, for example, manage one or more graphical user interface (GUI) resources used on the screen. The resource manager may manage, for example, a source code or memory space of an application. The database manager may, for example, create, retrieve, and/or change a database to be used by an application. The graphic manager may, for example, manage one or more graphical effects to be presented to the user or a user interface related thereto. The security manager may, for example, provide system security and/or user authentication.

According to an embodiment, the framework may dynamically delete some existing component or add a new component. According to an embodiment, at least a part of the framework may be included as a part of the operating system (e.g., the operating system 142 of FIG. 1), or may be implemented as separate software from the operating system.

In an embodiment, the electronic device may determine whether the information to be displayed in the view area is designated as a secure target. For example, if a type of information to be displayed in the view area is set to a personal information type of the user, the electronic device may determine that the information to be displayed in the view area is designated as the secure target. If the information to be displayed in the view area is designated as the secure target, the electronic device may display the information (e.g., characters) in the view area based on the process depicted in the flowchart 200.

In an embodiment, if determining that the information to be displayed in the view area is not designated as the secure target, the electronic device may omit operations 220 through 240 and display the information (e.g., characters) by configuring the view area as a single area.

FIG. 3 illustrates an example of a screen including a view area 320 displayed by an electronic device (e.g., the electronic device 101 of FIG. 1) according to an embodiment.

In an embodiment, the electronic device may display a screen 360 including a mobile identification document 310 on a display (e.g., the display module 160 of FIG. 1). For example, the electronic device may display the screen 360 including the mobile identification document 310 in response to a touch input corresponding to a UI object (e.g., an input button, an icon) provided through an identification application execution screen. Referring to FIG. 3, the mobile identification document 310 may include the view area 320. The view area 320 may include, for example, an area displaying information for identifying the user. The electronic device may obtain information in response to a user input for displaying the mobile identification document 310, and display the information within the view area defined to display the obtained information.

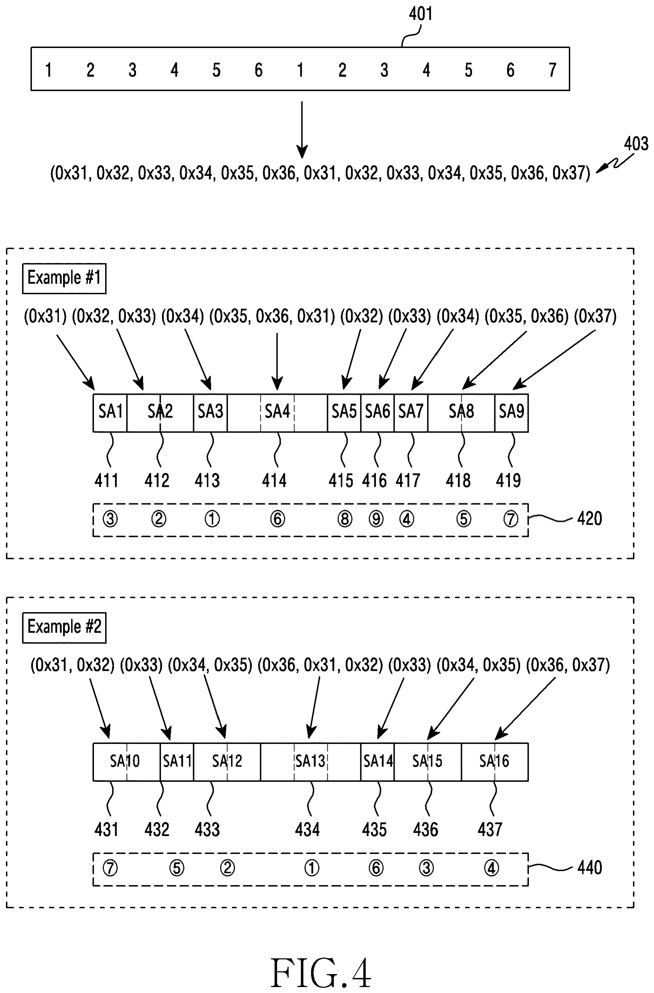

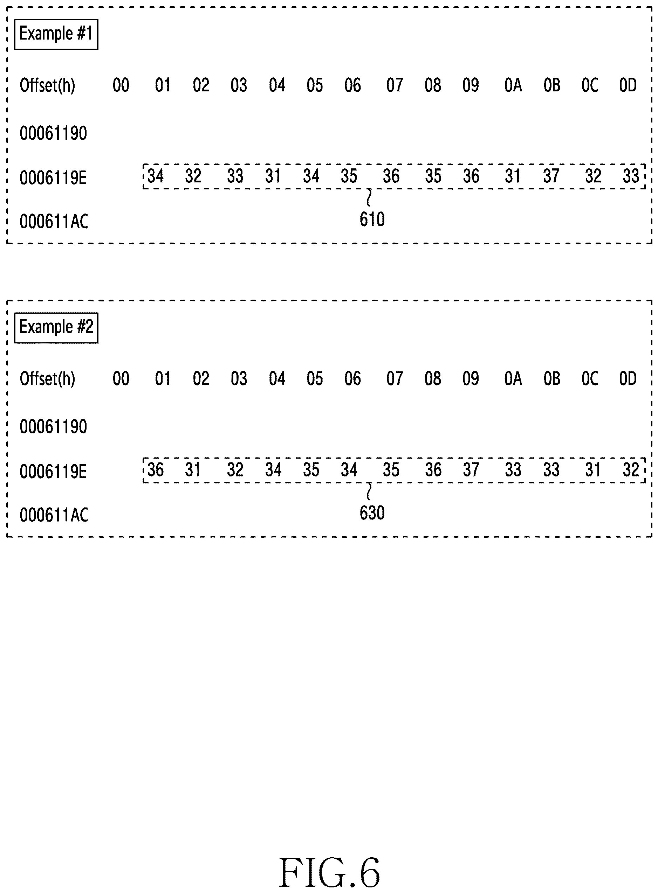

FIG. 4 illustrates an example in which an electronic device (e.g., the electronic device 101 of FIG. 1) determines subareas of a view area (e.g., the view area 320 of FIG. 3) and an order for the subareas according to an embodiment. FIG. 5 illustrates an example of an electronic device displaying a screen including a view area based on determined subareas according to an embodiment. FIG. 6 illustrates an example of information stored in memory as a result of displaying a view area based on determined subareas at an electronic device according to an embodiment.

In an embodiment, the electronic device may obtain a character code array 403 corresponding to characters 401 to be displayed in the view area. The electronic device may determine subareas to be assigned with at least one of character codes included in the character code array 403. For example, if a first user input for displaying information in the view area is inputted, the electronic device may divide the view area into a first subarea 411, a second subarea 412, a third subarea 413, a fourth subarea 414, a fifth subarea 415, a sixth subarea 416, a seventh subarea 417, an eighth subarea 418 and a ninth subarea 419.

In an embodiment, the electronic device may randomly determine a size of the subareas. For example, referring to Example #1 of FIG. 4, the electronic device may determine the size of the first subarea 411 to 1. The second subarea 412 may be displayed in a first direction (e.g., a right direction within the screen shown in FIG. 5) with respect to the first subarea 411. The electronic device may assign a first number of character codes to the first subarea 411, such that the first subarea 411 displays at least one first character of the first number from a second direction within the array of the characters. The second direction may correspond to an opposite direction of the first direction. The first number may correspond to a first size of the first subarea 411. For example, the electronic device may assign one character code 0x31 to the first subarea 411 having the size of 1. For example, the electronic device may determine the size of the second subarea 412 adjacent to the first subarea 411 to 2. The electronic device may assign a second number of character codes to the second subarea 412 such that the second subarea 412 displays at least one second character of the second number positioned in the first direction with respect to the at least one first character in the array of the characters. The second number may correspond to a second size of the second subarea 412. For example, the electronic device may assign two character codes 0x32 and 0x33 following the character code assigned to the first subarea 411 to the second subarea 412 having the size of 2. For example, the electronic device may determine the size of the third subarea 413 adjacent to the second subarea 412 to 1. The electronic device may assign one character code 0x34 following the character codes assigned to the second subarea 412 to the third subarea 413 having the size of 1. For example, the electronic device may determine the size of the fourth subarea 414 adjacent to the third subarea 413 to 3. The electronic device may assign three character codes 0x35, 0x36, and 0x31 following the character code assigned to the third subarea 413 to the fourth subarea 414 having the size of 3. For example, the electronic device may determine the size of the fifth subarea 415 adjacent to the fourth subarea 414 to 1. The electronic device may assign one character code 0x32 following the character codes assigned to the fourth subarea 414 to the fifth subarea 415 having the size of 1. For example, the electronic device may determine the size of the sixth subarea 416 adjacent to the fifth subarea 415 to 1. The electronic device may assign one character code 0x33 following the character code assigned to the fifth subarea 415 to the sixth subarea 416 having the size of 1. For example, the electronic device may determine the size of the seventh subarea 417 adjacent to the sixth subarea 416 to 1. The electronic device may assign one character code 0x34 following the character code assigned to the sixth subarea 416 to the seventh subarea 417 having the size of 1. For example, the electronic device may determine the size of the eighth subarea 418 adjacent to the seventh subarea 417 to 2. The electronic device may assign two character codes 0x35 and 0x36 following the character code assigned to the seventh subarea 417 to the eighth subarea 418 having the size of 2. For example, the electronic device may determine the size of the ninth subarea 419 adjacent to the eighth subarea 418 to 1. The electronic device may assign one character code 0x37 following the character codes assigned to the eighth subarea 418 to the ninth subarea 419 having the size of 1.

In an embodiment, the electronic device may determine an order 420 for the determined subareas 411, 412, 413, 414, 415, 416, 417, 418, and 419. For example, the electronic device may determine the order 420 in an order of the third subarea 413, the second subarea 412, the first subarea 411, the seventh subarea 417, the eighth subarea 418, the fourth subarea 414, the ninth subarea 419, the fifth subarea 415, and the sixth subarea 416.

However, the size and the order of the subareas shown in FIG. 4 are only to describe one example, and are not limited thereto.

Referring to Example #1 of FIG. 5, the electronic device may display characters based on character codes assigned to subareas 511, 512, 513, 514, 515, 516, 517, 518, and 519 within a view area 510. The electronic device may perform operations for displaying the characters assigned to the subareas based on the determined order 420. The electronic device may assign the character codes assigned to the subareas to the memory based on the determined order 420. For example, referring to Example #1 of FIG. 6, data 610 arranged in the order of the character codes assigned to the third subarea 513, the second subarea 512, the first subarea 511, the seventh subarea 517, the eighth subarea 518, the fourth subarea 514, the ninth subarea 519, the fifth subarea 515, and the sixth subarea 516 may be stored in the memory.

In an embodiment, the electronic device may differently determine the sizer and the order of the subareas every time the characters 401 are displayed. For example, if receiving a second user input after finishing displaying the characters 401 in the view area in response to the first user input, the electronic device may display the characters 401 in the view area based on at least one of the sizer and/or the order of the other subareas.

For example, referring to Example #2 of FIG. 4, if receiving the second user input, the electronic device may divide the view area into a tenth subarea 431, an eleventh subarea 432, a twelfth subarea 433, a thirteenth subarea 434, a fourteenth subarea 435, a fifteenth subarea 436, and a sixteenth subarea 437.

In an embodiment, the electronic device may initialize information of the size and the order of the view area after displaying the characters 401 in the view area in response to the first user input. In response to the second user input received after the first user input, the electronic device may redetermine the size and the order of the view area. For example, referring to Example #2 of FIG. 4, the electronic device may determine the size of the tenth subarea 431 to 2. The size of each subarea may be dynamically updated in response to user input. After displaying information in the view area, the data used to display the information in the subareas may be divided into units corresponding to each subarea and remain in the memory. As the size of each subarea is dynamically updated, the data left in the memory may become shuffled. This can help prevent attackers from identifying the displayed information, even if the data stored in the memory is stolen. The electronic device may assign character codes of a third number to the tenth subarea 431 such that the tenth subarea 431 displays at least one third character of the third number from one end of the second direction in the array of the characters. The third number may correspond to the third size of the tenth subarea 431. For example, the electronic device may assign two character codes 0x31 and 0x32 to the tenth subarea 431 having the size of 2. For example, the electronic device may determine the size of the eleventh subarea 432 adjacent to the tenth subarea 431 to 1. The eleventh subarea 432 may be displayed in the first direction (e.g., a right direction within the screen shown in FIG. 5) with respect to the tenth subarea 431. The electronic device may assign character codes of a fourth number to the eleventh subarea 432 such that the eleventh subarea 432 displays at least one fourth character of the fourth number positioned in the first direction with respect to the at least one third character in the array of the characters. The fourth number may correspond to a fourth size of the fourth subarea 432. For example, the electronic device may assign one character code 0x33 following the character codes assigned to the tenth subarea 431 to the eleventh subarea 432 having the size of 1. For example, the electronic device may determine the size of the twelfth subarea 433 adjacent to the eleventh subarea 432 to 2. The electronic device may assign two character codes 0x34 and 0x35 following the character code assigned to the eleventh subarea 432 to the twelfth subarea 433 having the size of 2. For example, the electronic device may determine the size of the thirteenth subarea 434 adjacent to the twelfth subarea 433 to 3. The electronic device may assign three character codes 0x36, 0x31, and 0x32 following the character codes assigned to the twelfth subarea 433 to the thirteenth subarea 434 having the size of 3. For example, the electronic device may determine the size of the fourteenth subarea 435 adjacent to the thirteenth subarea 434 to 1. The electronic device may assign one character code 0x33 following the character codes assigned to the thirteenth subarea 434 to the fourteenth subarea 435 having the size of 1. For example, the electronic device may determine the size of the fifteenth subarea 436 adjacent to the fourteenth subarea 435 to 2. The electronic device may assign two character codes 0x34 and 0x35 following the character code assigned to the fourteenth subarea 435 to the fifteenth subarea 436 having the size of 2. For example, the electronic device may determine the size of the sixteenth subarea 437 adjacent to the fifteenth subarea 436 to 2. The electronic device may assign two character codes 0x36 and 0x37 following the character codes assigned to the fifteenth subarea 436 to the sixteenth subarea 437 having the size of two.

The electronic device may determine an order 440 of the determined subareas 431, 432, 433, 434, 435, 436, and 437. For example, the electronic device may determine the order 440 in an order of the thirteenth subarea 434, the twelfth subarea 433, the fifteenth subarea 436, the sixteenth subarea 437, the eleventh subarea 432, the fourteenth subarea 435, and the tenth subarea 431.

However, the sizer and the order of the subareas shown in FIG. 4 are to describe an example, and are not limited thereto.

Referring to Example #2 in FIG. 5, the electronic device may display characters based on character codes assigned to subareas 531, 532, 533, 534, 535, 536, and 537 within the view area 530. The electronic device may perform operations for displaying the characters assigned to the subareas based on the determined order 440. The characters displayed in the view area 530 may be displayed identically to the characters displayed in the view area 510 of Example #1, but the memory may store the character codes in a different order. For example, referring to Example #2 of FIG. 6, the memory may store data 630 arranged in the order of the character codes assigned to the thirteenth subarea 434, the twelfth subarea 433, the fifteenth subarea 436, the sixteenth subarea 437, the eleventh subarea 432, the fourteenth subarea 435, and the tenth subarea 431.

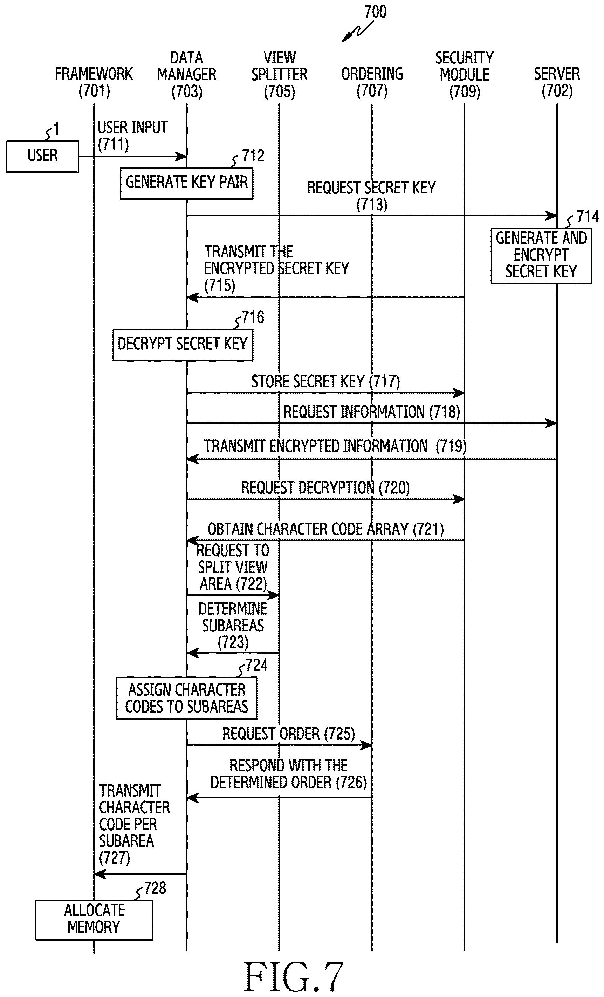

FIG. 7 is a flowchart 700 illustrating a process for an electronic device (e.g., the electronic device 101 of FIG. 1) to obtain and display information to be displayed in a view area (e.g., the view area 320 of FIG. 3) according to an embodiment.

In an embodiment, a framework 701, a data manager module 703, a view splitter 705, an order allocating module 707 and a security module 709 may be understood as modules for describing operations of the electronic device. For example, the framework 701, the data manager module 703, the view splitter 705, the order allocating module 707, and the security module 709 may be implemented by at least one processor (e.g., the processor 120 of FIG. 1) of the electronic device executing instructions or storing data stored in memory (e.g., the memory 130 of FIG. 1). In FIG. 7, for ease of illustration, the framework 701, the data manager 703, the view splitter 705, the order allocating module 707, and the security module 709 are configured separately, but at least two or more may be configured as a single module. For example, at least one of the data manager 703, the view splitter 705, the order allocating module 707 or the security module 709 may be included in the framework 701. The server 702 may be an external server including hardware configured outside the electronic device, but may be configured as a system included in the electronic device.

According to an embodiment, in operation 711, the data manager module 703 of the electronic device may receive from a user 1 a user input for displaying information in the view area. For example, the electronic device may receive the user input through a user interface of an application for displaying the view area. For example, the electronic device may receive the user input for authenticating the user (e.g., fingerprint input, facial recognition, personal identification number (PIN) input, password input) in operation 711. The electronic device may request information from the server 702 based on the user input received in operation 711.

According to an embodiment, in operation 712, the data manager module 703 may generate a key pair including a private key, and a public key corresponding to the private key in response to the user input. The public key may indicate a cryptographic key which may be used to encrypt data. The private key may indicate a cryptographic key which may be used to decrypt the data encrypted using the public key. For example, the data manager module 703 may generate the private key and the public key based on a seed value of the electronic device. However, the method for generating the cryptographic keys is not limited thereto.

According to an embodiment, in operation 713, the data manager module 703 may transmit a secret key request including the public key to the server 702. For example, the data manager module 703 may transmit the secret key request to an external server (e.g., the server 108 of FIG. 1) through a communication circuit (e.g., the communication module 190 of FIG. 1) of the electronic device. The server 702 may include a server which issues information to be displayed in the view area.

According to an embodiment, in operation 714, the server 702 may generate a secret key. The server 702 may encrypt the secret key based on the received public key. In operation 715, the server 702 may transmit the encrypted secret key to the data manager module 703. For example, the data manager module 703 may receive the encrypted secret key from the external server through the communication circuit of the electronic device.

According to an embodiment, in operation 716, the data manager module 703 may decrypt the received secret key using the private key. In operation 717, the data manager module 703 may store the decrypted secret key in the security module 709. For example, the security module 709 may include a key store for storing cryptographic keys. For example, the security module 709 may include a secure element for managing security information. For example, the security module 709 may include a secure area which is set in the memory (e.g., the memory 130 of FIG. 1). However, the example of the security module 709 is to illustrate one embodiment and is not limited thereto. In an embodiment, the data manager module 703 may store the secret key by designating an alias for the secret key.

According to an embodiment, in operation 718, the data manager module 703 may transmit to the server 702 a request for information corresponding to the user input received in operation 711. In operation 719, the data manager module 703 may receive the information encrypted using the secret key from the server 702. For example, the data manager module 703 may request and receive information from the server 702 through the communication circuit of the electronic device.

According to an embodiment, in operation 720, the data manager module 703 may request the security module 709 to decrypt the encrypted information received in operation 719. In an embodiment, the data manager module 703 may request the security module 709 to perform the decryption based on the alias designated in the secret key.

According to an embodiment, in operation 721, the data manager module 703 may obtain the decrypted information. For example, if the information to be displayed in the view area is characters, the data manager module 703 may obtain the decrypted information in the form of a character code array including character codes. The decrypted information obtained by the data manager module 703 may be obtained in the form of the character code array rather than in the form of a string. For example, referring to FIG. 4, the data manager module 703 may obtain the character code array 403 of 0x31, 0x32, 0x33, 0x34, 0x35, 0x36, 0x31, 0x32, 0x33, 0x34, 0x35, 0x36, and 0x37.

According to an embodiment, in operation 722, the data manager module 703 may request the view splitter 705 to split the view area. In operation 723, the view splitter 705 may determine subareas for the view area and the size of the subarea. The view splitter 705 may divide the view area into the subareas randomly sized within a designated range.

According to an embodiment, in operation 724, the data manager module 703 may assign character codes included in the character code array to the subareas based on the determined size of the subareas. For example, the data manager module 703 may assign the character codes to the subareas as shown in Example #1 of FIG. 4.

According to an embodiment, in operation 725, the data manager module 703 may request an order for setting the data assigned to the subareas from the order allocating module 707. In operation 726, the order allocating module 707 may respond with a randomly determined order for the subareas.

According to an embodiment, in operation 727, the data manager module 703 may sequentially transmit the character codes assigned to the subareas in the determined order to the framework 701. In operation 728, the framework 701 may allocate the received character codes to the memory to be exposed in each subarea. By injecting the view area with the character codes assigned to the subareas based on the order set for the subareas, data (e.g., the data 610, and the data 630 of FIG. 6) with the shuffled character codes included in the character code array may remain in the memory after the information is exposed in the view area. Thus, even if the data stored in the memory is stolen, it may be difficult to obtain which information was exposed in the view area.

In an embodiment, if the information exposure in the view area is finished (if the characters are displayed), the data manager module 703 may initialize arrangement information (e.g., at least one of subarea information splitting the view area or ordering information of the subareas) of the view area.

In an embodiment, if the information exposure in the view area is finished (if the characters are displayed), the data manager module 703 may overwrite the area storing the character code array obtained in operation 721 with dummy data.

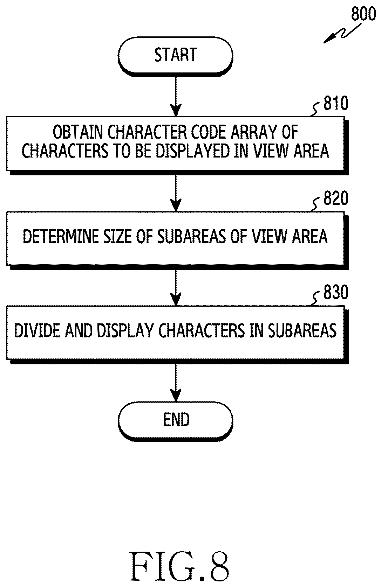

FIG. 8 is a flowchart 800 illustrating a process for an electronic device (e.g., the electronic device 101 of FIG. 1) to display information in a view area (e.g., the view area 320 of FIG. 3) based on a size of subareas according to an embodiment.

According to an embodiment, in operation 810, the electronic device may obtain a character code array corresponding to characters to be displayed in the view area through an application. For example, while executing the application which provides the mobile identification function, the electronic device may obtain information to be displayed in the view area in response to a touch input to an identification display icon displayed on a touchscreen (e.g., the display module 160 of FIG. 1) of the electronic device. Acquiring a character code array including information to be displayed in a view area provides a mechanism for accessing and preparing the information to be rendered on the display. The electronic device may identify which character will be displayed on the screen through the character code included in the character code array. In an embodiment, the electronic device may obtain information stored in the memory of the electronic device, or may obtain information from the external device (e.g., the electronic device 102, the electronic device 104, or the server 108 of FIG. 1).

According to an embodiment, in operation 820, the electronic device may randomly divide the view area into a plurality of subareas. For example, the electronic device may randomly determine the sizer of the subareas for the view area. Randomly determining a size for each of a plurality of subareas enhances security by introducing randomness to the layout of displayed information. This prevents predictable patterns, reducing risks of information theft or reverse engineering from memory dumps. The electronic device may assign at least some of the characters included in the character code array to the subareas respectively based on the sizer of the divided subareas.

According to an embodiment, in operation 830, the electronic device may distribute to the divided subareas and display the characters to be displayed in the view area. Dividing and displaying a plurality of characters corresponding to the character code array in the subareas ensures that characters are securely and systematically rendered within their designated subareas. This segmentation protects data integrity and creates a visually organized display. The electronic device may display the view area based on the subareas divided differently each time the view area is displayed such that shuffled data remains in the memory.

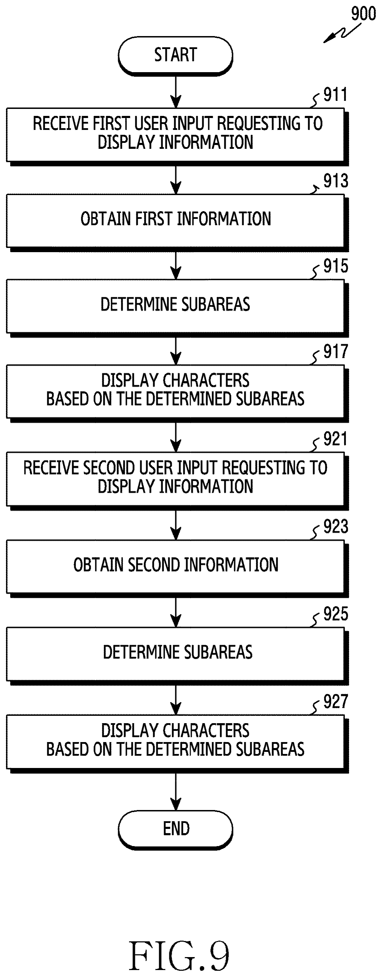

FIG. 9 is a flowchart illustrating a process 900 for an electronic device (e.g., the electronic device 101 of FIG. 1) to display information in response to a first user input and a second user input respectively according to an embodiment.

According to an embodiment, in operation 911, the electronic device may receive a first user input requesting to display information in the view area. For example, the electronic device may receive a user input selecting a menu button to display a mobile identification document. For example, the electronic device may receive a user input for authenticating the user.

According to an embodiment, in operation 913, the electronic device may obtain first information in response to the first user input. For example, the electronic device may obtain a character code array based on operation 719 through operation 721 of FIG. 7. In operation 915, the electronic device may determine a plurality of subareas for the view area. The plurality of the subareas may include a first subarea having a first size and a second subarea having a second size.

According to an embodiment, in operation 917, the electronic device may display characters in the view area based on the plurality of the subareas. For example, the electronic device may display a first number of first characters in the first subarea. The first number may correspond to the first size of the first subarea. For example, the electronic device may display a second number of second characters in the second subarea. The second number may correspond to the second size of the second subarea.

According to an embodiment, in operation 921, the electronic device may receive a second user input requesting to display information in the view area. For example, the electronic device may receive a user input selecting a menu button to display a mobile identification document. For example, the electronic device may receive a user input for authenticating the user.

According to an embodiment, in operation 923, the electronic device may obtain second information based on a second user response. The second information may include the same information as the first information. For example, the electronic device may obtain a character code array based on operation 719 through operation 721 of FIG. 7. In operation 925, the electronic device may redetermine a plurality of subareas for the view area. The plurality of the subareas may include a third subarea having a third size and a fourth subarea having a fourth size. The third size may be determined differently from the first size. The fourth size may be determined differently from the second size.

According to an embodiment, in operation 927, the electronic device may display the characters in the view area based on the plurality of the subareas. For example, the electronic device may display a third number of third characters in the third subarea. The third number may correspond to the third size of the third subarea. For example, the electronic device may display a fourth number of fourth characters in the fourth subarea. The fourth number may correspond to the fourth size of the fourth subarea.

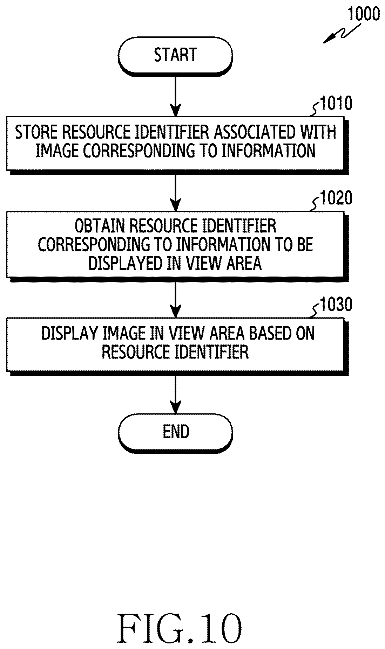

FIG. 10 is a flowchart 1000 illustrating a process for an electronic device (e.g., the electronic device 101 of FIG. 1) to display information based on an image resource according to an embodiment. FIG. 11 conceptually illustrates a method of an electronic device for displaying information based on an image resource according to an embodiment.

According to an embodiment, in operation 1010, the electronic device may store a resource identifier associated with an image corresponding to information to be displayed. For example, the electronic device may store a resource identifier for identifying an image including a shape of 1 to display the number "1". The resource identifier may include information for identifying the image as a resource for the electronic device to display on the display. For example, referring to FIG. 11, the electronic device may store a resource identifier 1121 associated with an image 1123 in the memory 130.

According to an embodiment, in operation 1020, the electronic device may obtain a resource identifier corresponding to the information to be displayed in the view area. For example, if displaying '1234', the electronic device may obtain resource identifiers for identifying images corresponding to 1, 2, 3, and 4. Referring to FIG. 11, the electronic device may obtain resource identifiers 1110 indicating images to be displayed in the view area.

According to an embodiment, in operation 1030, the electronic device may display an image in the view area based on the resource identifier obtained in operation 1020. For example, referring to FIG. 11, the electronic device may obtain images 1130 corresponding to the resource identifiers 1110 from the memory 130. The electronic device may display, for example, the images 1130 in a view area 1145 within a mobile identification document 1140. If displaying the information in the view area based on the resource identifier, only the resource identifier is recorded in the memory during the process of displaying the information in the view area, and accordingly even if the data stored in the memory is stolen, it is impossible to obtain what the resource identifier indicates, thus making it difficult to know what information is displayed in the view area.

In an embodiment, the resource identifiers 1121 corresponding to the images 1130 may include shuffled values based on a seed value. For example, the electronic device may transmit to the server the seed value assigned to the electronic device. If the electronic device transmits a request for the resource identifier to the server, the server may transmit the resource identifiers 1121 generated based on the seed value to the electronic device. The electronic device may store the resource identifiers 1121 received from the server by mapping them to the images 1130.

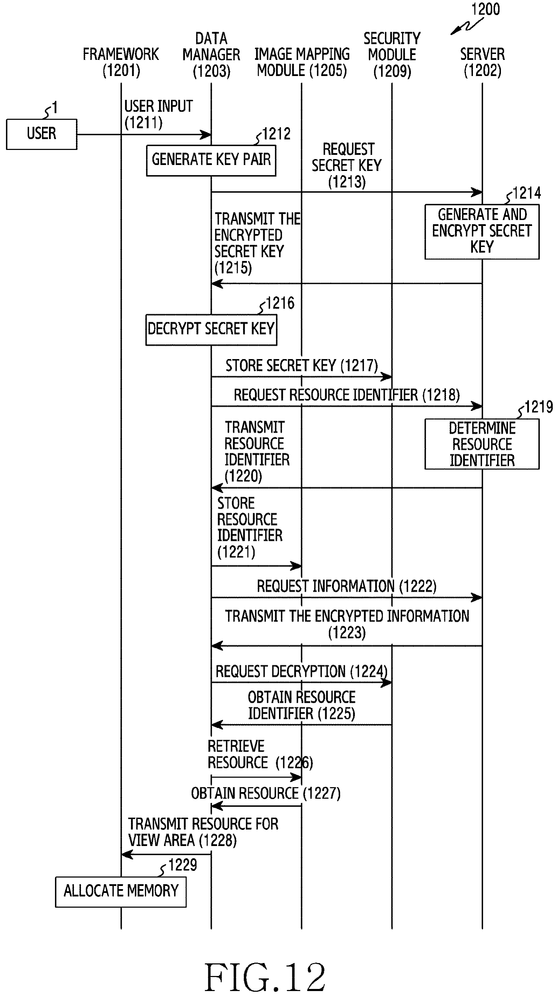

FIG. 12 is a flowchart 1200 illustrating a process for an electronic device (e.g., the electronic device 101 of FIG. 1) to display information based on an image resource according to an embodiment.

In an embodiment, a framework 1201, a data manager module 1203, an image mapping module 1205, and a security module 1209 may be understood as modules for describing operations of the electronic device. For example, the framework 1201, the data manager module 1203, the image mapping module 1205, and the security module 1209 may be implemented by at least one processor (e.g., the processor 120 of FIG. 1) of the electronic device executing instructions or storing data stored in memory (e.g., the memory 130 of FIG. 1). In FIG. 12, for ease of illustration, the framework 1201, the data manager 1203, the image mapping module 1205, and the security module 1209 are configured individually, but at least two of them may be configured as a single module. For example, at least one of the data manager 1203, the image mapping module 1205, or the security module 1209 may be included in the framework 1201. The server 1202 may be an external server including hardware configured outside the electronic device, but may be configured as a system included in the electronic device.

According to an embodiment, in operation 1211, the data manager module 1203 of the electronic device may receive from the user 1 a user input for displaying information in the view area. For example, the electronic device may receive the user input via a user interface of an application for displaying the view area. For example, in operation 1211, the electronic device may receive a user input for authenticating the user (e.g., fingerprint input, facial recognition, PIN input, password input). Obtaining first information relating to characters to be displayed in response to a first user input enables the system to adapt to user-driven requirements by dynamically acquiring data for the initial display. This ensures that the display is tailored to the user's needs at the time of interaction. The electronic device may request information from the server 1202 based on the user input received in operation 1211.

According to an embodiment, in operation 1212, the data manager module 1203 may generate a key pair including a private key and a public key corresponding to the private key in response to the user input. The public key may indicate a cryptographic key which may be used to encrypt data. The private key may indicate a cryptographic key which may be used to decrypt data encrypted using the public key. For example, the data manager module 1203 may generate the private key and the public key based on the seed value of the electronic device. However, the method of generating keys for the cryptography are not limited thereto.

According to an embodiment, in operation 1213, the data manager module 1203 may transmit a secret key request including the public key to the server 1202. For example, the data manager module 1203 may transmit the secret key request to an external server (e.g., the server 108 of FIG. 1) through a communication circuit (e.g., the communication module 190 of FIG. 1) of the electronic device. The server 1202 may include a server for issuing information to be displayed in the view area.

According to an embodiment, in operation 1214, the server 1202 may generate a secret key. The server 1202 may encrypt the secret key based on the received public key. In operation 1215, the server 1202 may transmit the encrypted secret key to the data manager module 1203. For example, the data manager module 1203 may receive the encrypted secret key from the external server through the communication circuit of the electronic device.

According to an embodiment, in operation 1216, the data manager module 1203 may decrypt the received secret key using the private key. In operation 1217, the data manager module 1203 may store the decrypted secret key in the security module 1209. For example, the security module 1209 may include a key store for storing cryptographic keys. For example, the security module 1209 may include a secure element for managing security information. For example, the security module 1209 may include a secure area which is set in the memory (e.g., the memory 130 of FIG. 1). However, the example of the security module 1209 is to illustrate an embodiment, and is not limited thereto. In an embodiment, the data manager module 1203 may store the secret key by designating an alias for the secret key.

According to an embodiment, in operation 1218, the data manager module 1203 may transmit a resource identifier request to the server 1202. For example, the data manager module 1203 may retrieve the seed value through the image mapping module 1205. The seed value may be determined based on, for example, user identification information or device identification information. For example, the user identification information may include an email address or user account information. For example, the device identification information may include a hardware identifier, a framework software platform identifier, or an international mobile equipment identity (IMEI). The data manager module 1203 may transmit a resource identifier request including the seed value to the server 1202.

According to an embodiment, in operation 1219, the server 1202 may determine a resource identifier. For example, the server 1202 may determine the resource identifier based on the seed value received in operation 1218. For example, the server 1201 may input the seed value into a predefined algorithm and thus determine the resource identifier (e.g., the resource identifiers 1121 of FIG. 11) based on the shuffled values. In operation 1220, the data manager module 1203 may receive the resource identifier from the server 1202. For example, the data manager module 1203 may obtain the resource identifiers 1121 mapped to the images 1123 of FIG. 11 in operation 1218 through operation 1220. In operation 1221, the data manager module 1203 may store the received resource identifier in the image mapping module 1205.

According to an embodiment, in operation 1222, the data manager module 1203 may request from the server 1202 information to be displayed in the view area. In operation 1223, the data manager module 1203 may receive information encrypted with the secret key from the server 1202. In operation 1224, the data manager module 1203 may request the security module 1209 to decrypt the received information. In an embodiment, the data manager module 1203 may request the security module 1209 to decrypt the encrypted information based on the alias designated in the secret key. In operation 1225, the data manager module 1203 may obtain the resource identifier (e.g., the resource identifier 1110 of FIG. 11) decrypting the received information. In operation 1226, the data manager module 1203 may look up a resource (e.g., the images 1123 of FIG. 11 or addresses/IDs of the images 1123) corresponding to the decrypted resource identifier from the image mapping module 1205. The image mapping module 1205 may look up the resource based on the resource identifier stored in operation 1221. In operation 1226, the data manager module 1203 may obtain the resource corresponding to the resource identifier from the image mapping module 1205.

According to an embodiment, in operation 1228, the data manager module 1203 may provide the obtained resource for the view area to the framework 1201. In operation 1229, the framework 1201 may allocate the received resource to the memory to thus display images (e.g., the images 1130 of FIG. 11) corresponding to the resource identifier (e.g., the resource identifier 1110 of FIG. 11) in the view area (e.g., the view area 1145 of FIG. 11).

In an embodiment, the electronic device may operate by combining the embodiments illustrated in FIG. 4 through FIG. 7 and the embodiments illustrated in FIG. 10 through FIG. 12. For example, the electronic device may display some information in the view area based on the embodiments illustrated in FIG. 4 through FIG. 7, and display other information based on the embodiments illustrated in FIG. 10 through FIG. 12.

According to an embodiment, an electronic device (e.g., the electronic device 101 of FIG. 1) may include a display (e.g., the display module 160 of FIG. 1), at least one processor (e.g., the processor 120 of FIG. 1) and memory (e.g., the memory 130) storing instructions. The instructions may, when executed by the at least one processor (e.g., the processor 120 of FIG. 1), cause the electronic device (e.g., the electronic device 101 of FIG. 1) to, based on a user input received through an application to display information, acquire a character code array (e.g., the character mode array 403 of FIG. 4) corresponding to the information (e.g., the characters 401 of FIG. 4) to be displayed in a view area (e.g., the view area 320 of FIG. 3, the view area 510 and the view area 530 of FIG. 5, the view area 1145) through the display (e.g., the display module 160 of FIG. 1). The instructions may, when executed by the at least one processor (e.g., the processor 120 of FIG. 1), cause the electronic device (e.g., the electronic device 101 of FIG. 1) to divide the view area (e.g., the view area 320 of FIG. 3, the view area 510 and the view area 530 of FIG. 5, the view area 1145) into a plurality of subareas according to a size determined for each of the plurality of the subareas. The plurality of the subareas each may include areas for displaying (e.g., the display module 160 of FIG. 1) a number of characters defined by the size. The instructions may, when executed by the at least one processor (e.g., the processor 120 of FIG. 1), cause the electronic device (e.g., the electronic device 101 of FIG. 1) to determine one or more character codes corresponding to the plurality of the subareas respectively based on the character code array (e.g., the character code array 403 of FIG. 4). The instructions may, when executed by the at least one processor (e.g., the processor 120 of FIG. 1), cause the electronic device (e.g., the electronic device 101 of FIG. 1) to display (e.g., the display module 160 of FIG. 1) characters in the view area (e.g., the view area 320 of FIG. 3, the view area 510 and the view area 530 of FIG. 5, the view area 1145) based on one or more character codes corresponding to each of the plurality of the subareas divided according to the respective size determined for each of the plurality of the subareas.

In an embodiment, the application may include an identification application for displaying a mobile identification document. The view area (e.g., the view area 320 of FIG. 3, the view area 510 and the view area 530 of FIG. 5, the view area 1145) may be defined to display the information in the mobile identification document displayed by the identification application.

The electronic device (e.g., the electronic device of FIG. 1) may further include a communication circuit for communicating with an external device. The instructions may, when executed by the at least one processor (e.g., the processor 120 of FIG. 1), cause the electronic device (e.g., the electronic device 101 of FIG. 1) to, while executing the application, receive the user input for displaying the mobile identification document. The instructions may, when executed by the at least one processor (e.g., the processor 120 of FIG. 1), cause the electronic device (e.g., the electronic device 101 of FIG. 1) to generate a private key and a public key corresponding to the private key based on receiving the user input. The instructions may, when executed by the at least one processor (e.g., the processor 120 of FIG. 1), cause the electronic device (e.g., the electronic device 101 of FIG. 1) to transmit the public key to an external server through the communication circuit. The instructions may, when executed by the at least one processor (e.g., the processor 120 of FIG. 1), cause the electronic device (e.g., the electronic device 101 of FIG. 1) to receive from the external server a secret key encrypted based on the public key. The instructions may, when executed by the at least one processor (e.g., the processor 120 of FIG. 1), cause the electronic device (e.g., the electronic device 101 of FIG. 1) to decrypt the encrypted secret key based on the private key. The instructions may, when executed by the at least one processor (e.g., the processor 120 of FIG. 1), cause the electronic device (e.g., the electronic device 101 of FIG. 1) to receive encrypted information from the external server. The instructions may, when executed by the at least one processor (e.g., the processor 120 of FIG. 1), cause the electronic device (e.g., the electronic device 101 of FIG. 1) to obtain the character code array by decrypting the encrypted information based on the secret key.

In an embodiment, the application may, when executed by the at least one processor (e.g., the processor 120 of FIG. 1), cause the electronic device (e.g., the electronic device 101 of FIG. 1) to authenticate a user of the electronic device (e.g., the electronic device 101 of FIG. 1). the application may, when executed by the at least one processor (e.g., the processor 120 of FIG. 1), cause the electronic device (e.g., the electronic device 101 of FIG. 1) to request, to the external server, information based on a result of the authentication.

In an embodiment, the plurality of the subareas may include a first subarea and a second subarea having an area size different from the first subarea. The instructions may be executed by the at least one processor (e.g., the processor 120 of FIG. 1), to cause the electronic device (e.g., the electronic device 101 of FIG. 1) to display a first number of characters in the first subarea, and to display a second number, different from the first number, of characters in the second subarea.

In an embodiment, the instructions may be executed by the at least one processor (e.g., the processor 120 of FIG. 1), to cause the electronic device (e.g., the electronic device 101 of FIG. 1) to determine an order of rendering the plurality of the subareas. The instructions may be executed by the at least one processor (e.g., the processor 120 of FIG. 1), to cause the electronic device (e.g., the electronic device 101 of FIG. 1) to record the one or more character codes in the memory (e.g., the memory 130) based on the order of rendering the plurality of the subareas. The rendering order of subareas may follow any sequence, including but not limited to top-to-bottom, left-to-right, random, or user-defined patterns.

In an embodiment, the instructions may, when executed by the at least one processor (e.g., the processor 120 of FIG. 1), cause the electronic device (e.g., the electronic device 101 of FIG. 1) to overwrite, in the memory (e.g., the memory 130), an area, where the character code array (e.g., the character code array 403 of FIG. 4) is stored, with dummy data after the characters are displayed on the display (e.g., the display module 160 of FIG. 1).

In an embodiment, the instructions may, when executed by the at least one processor (e.g., the processor 120 of FIG. 1), cause the electronic device (e.g., the electronic device 101 of FIG. 1) to determine whether the information to be displayed on the view area (e.g., the view area 320 of FIG. 3, the view area 510 and the view area 530 of FIG. 5, the view area 1145) is designated as a subject to security. The instructions may, when executed by the at least one processor (e.g., the processor 120 of FIG. 1), cause the electronic device (e.g., the electronic device 101 of FIG. 1) to, when the information to be displayed on the view area (e.g., the view area 320 of FIG. 3, the view area 510 and the view area 530 of FIG. 5, the view area 1145) is designated as the subject to security, divide the view area (e.g., the view area 320 of FIG. 3, the view area 510 and the view area 530 of FIG. 5, the view area 1145) into the plurality of the subareas and render the characters to the plurality of the subareas. The instructions may, when executed by the at least one processor (e.g., the processor 120 of FIG. 1), cause the electronic device (e.g., the electronic device 101 of FIG. 1) to, when the target information is not designated as the subject to security, render the characters in the view area (e.g., the view area 320 of FIG. 3, the view area 510 and the view area 530 of FIG. 5, the view area 1145) by configuring the view area (e.g., the view area 320 of FIG. 3, the view area 510 and the view area 530 of FIG. 5, the view area 1145) as a single area.

According to an embodiment, an electronic device (e.g., the electronic device 101 of FIG. 1) may include a display (e.g., the display module 160 of FIG. 1), at least one processor (e.g., the processor 120 of FIG. 1) and memory (e.g., the memory 130) for storing instructions. The instructions may, when executed by the at least one processor (e.g., the processor 120 of FIG. 1), cause the electronic device (e.g., the electronic device 101 of FIG. 1) to acquire a character code array (e.g., the character code array 403 of FIG. 4) including information (e.g., the characters 401 of FIG. 4) to be displayed in a view area (e.g., the view area 320 of FIG. 3, the view area 510 and the view area 530 of FIG. 5, the view area 1145) on the display (e.g., the display module 160 of FIG. 1), through an application. The instructions may, when executed by the at least one processor (e.g., the processor 120 of FIG. 1), cause the electronic device (e.g., the electronic device 101 of FIG. 1) to randomly determine a size for each of a plurality of subareas of the view area (e.g., the view area 320 of FIG. 3, the view area 510 and the view area 530 of FIG. 5, the view area 1145). The plurality of the subareas each may be configured to display (e.g., the display module 160 of FIG. 1) a number, defined by the size, of characters. The instructions may, when executed by the at least one processor (e.g., the processor 120 of FIG. 1), cause the electronic device (e.g., the electronic device 101 of FIG. 1) to distribute and display (e.g., the display module 160 of FIG. 1) a plurality of characters corresponding to the character code array (e.g., the character code array 403 of FIG. 4) in the plurality of the subareas.

In an embodiment, the application may include an identification application for displaying a mobile identification document. The view area (e.g., the view area 320 of FIG. 3, the view area 510 and the view area 530 of FIG. 5, the view area 1145) may be defined to display the information within the mobile identification document displayed by the identification application.

In an embodiment, the plurality of the subareas may include a first subarea and a second subarea having a different area size from the first subarea. The instructions may be executed by the at least one processor (e.g., the processor 120 of FIG. 1), to cause the electronic device (e.g., the electronic device 101 of FIG. 1) to display a first number of characters in the first subarea. The instructions may be executed by the at least one processor (e.g., the processor 120 of FIG. 1), to cause the electronic device (e.g., the electronic device 101 of FIG. 1) to display a second number of characters different from the first number in the second subarea.

According to an embodiment, an electronic device (e.g., the electronic device 101 of FIG. 1) may include a display (e.g., the display module 160 of FIG. 1), at least one processor (e.g., the processor 120 of FIG. 1) and memory (e.g., the memory 130) for storing instructions. The instructions may, when executed by the at least one processor (e.g., the processor 120 of FIG. 1), cause the electronic device (e.g., the electronic device 101 of FIG. 1) to obtain first information of characters to be displayed in a view area (e.g., the view area 320 of FIG. 3, the view area 510 and the view area 530 of FIG. 5, the view area 1145) through the display (e.g., the display module 160 of FIG. 1), in response to a first user input. The instructions may, when executed by the at least one processor (e.g., the processor 120 of FIG. 1), cause the electronic device (e.g., the electronic device 101 of FIG. 1) to, based on the obtained first information, determine a plurality of subareas including a first subarea having a first size and a second subarea having a second size with respect to the view area (e.g., the view area 320 of FIG. 3, the view area 510 and the view area 530 of FIG. 5, the view area 1145). Determining a plurality of subareas based on the first information dynamically allocates the display area into subareas based on user-driven or context-specific requirements. This flexibility ensures that the display layout is optimized for different types of information. The instructions may, when executed by the at least one processor (e.g., the processor 120 of FIG. 1), cause the electronic device (e.g., the electronic device 101 of FIG. 1) to, based on the obtained first information, display a first number of first characters corresponding to the first size among the characters in the first subarea. The instructions may, when executed by the at least one processor (e.g., the processor 120 of FIG. 1), cause the electronic device (e.g., the electronic device 101 of FIG. 1) to, based on the obtained first information, display a second number of second characters corresponding to the second size among the characters in the second subarea. Displaying characters in subareas based on the determined sizes ensures that characters are precisely rendered within dynamically determined subareas, maintaining clarity and usability even as display configurations change. The instructions may, when executed by the at least one processor (e.g., the processor 120 of FIG. 1), cause the electronic device (e.g., the electronic device 101 of FIG. 1) to, in response to a second user input, obtain second information of the characters to be displayed in the view area (e.g., the view area 320 of FIG. 3, the view area 510 and the view area 530 of FIG. 5, the view area 1145) on the display (e.g., the display module 160 of FIG. 1). The instructions may, when executed by the at least one processor (e.g., the processor 120 of FIG. 1), cause the electronic device (e.g., the electronic device 101 of FIG. 1) to, based on the obtained second information, determine a plurality of subareas including a third subarea having a third size different from the first size and a fourth subarea having a fourth size different from the second size with respect to the view area (e.g., the view area 320 of FIG. 3, the view area 510 and the view area 530 of FIG. 5, the view area 1145). The instructions may, when executed by the at least one processor (e.g., the processor 120 of FIG. 1), cause the electronic device (e.g., the electronic device 101 of FIG. 1) to, based on the obtained second information, display a third number of characters corresponding to the third size among the characters in the third subarea. The instructions may, when executed by the at least one processor (e.g., the processor 120 of FIG. 1), cause the electronic device (e.g., the electronic device 101 of FIG. 1) to, based on the obtained second information, display a fourth number of characters corresponding to the fourth size among the characters in the fourth subarea.

In an embodiment, the first user input may include an input for displaying the mobile identification document based on an identification application which displays the mobile identification document. The second user input may include an input for displaying the mobile identification document based on the identification application after displaying the mobile identification document corresponding to the first user input is ended. The view area (e.g., the view area 320 of FIG. 3, the view area 510 and the view area 530 of FIG. 5, the view area 1145) may include an area defined to display information within the mobile identification document displayed by the identification application.

In an embodiment, the electronic device (e.g., the electronic device 101 of FIG. 1) may further include a communication circuit for communicating with an external device. The instructions may be executed by the at least one processor (e.g., the processor 120 of FIG. 1), to cause the electronic device (e.g., the electronic device 101 of FIG. 1) to generate a private key and a public key corresponding to the private key. The instructions may be executed by the at least one processor (e.g., the processor 120 of FIG. 1), to cause the electronic device (e.g., the electronic device 101 of FIG. 1) to transmit the public key to an external server through the communication circuit. The instructions may be executed by the at least one processor (e.g., the processor 120 of FIG. 1), to cause the electronic device (e.g., the electronic device 101 of FIG. 1) to receive from the external server a secret key encrypted based on the public key. The instructions may be executed by the at least one processor (e.g., the processor 120 of FIG. 1), to cause the electronic device (e.g., the electronic device 101 of FIG. 1) to decrypt the encrypted secret key based on the private key. The instructions may be executed by the at least one processor (e.g., the processor 120 of FIG. 1), to cause the electronic device (e.g., the electronic device 101 of FIG. 1) to receive encrypted information from the external server. The instructions may be executed by the at least one processor (e.g., the processor 120 of FIG. 1), to cause the electronic device (e.g., the electronic device 101 of FIG. 1) to obtain the first information or the second information by decrypting the encrypted information based on the secret key.

In an embodiment, the second subarea may be displayed in a first direction with respect to the first subarea. The fourth subarea may be displayed in the first direction with respect to the third subarea.

In an embodiment, the instructions may, when executed by the at least one processor (e.g., the processor 120 of FIG. 1), cause the electronic device (e.g., the electronic device 101 of FIG. 1) to display in the first subarea the first number of the first characters from one end of a second direction opposite to the first direction within an array of the characters (e.g., the character mode array 403 of FIG. 4) in the first subarea. The instructions may, when executed by the at least one processor (e.g., the processor 120 of FIG. 1), cause the electronic device (e.g., the electronic device 101 of FIG. 1) to display in the third subarea the third number of the third characters from one end of the second direction within the array of the characters (e.g., the character mode array 403 of FIG. 4) in the third subarea.

In an embodiment, the instructions may, when executed by the at least one processor (e.g., the processor 120 of FIG. 1), cause the electronic device (e.g., the electronic device 101 of FIG. 1) to render the characters within the first subarea and then render the characters within the second subarea. The instructions may, when executed by the at least one processor (e.g., the processor 120 of FIG. 1), cause the electronic device (e.g., the electronic device 101 of FIG. 1) to render the characters within the fourth subarea and then render the characters within the third subarea.

In an embodiment, an operating method of an electronic device (e.g., the electronic device 101 of FIG. 1) may include, based on a user input received through an application to display information, acquiring a character code array (e.g., the character mode array 403 of FIG. 4) corresponding to the information (e.g., the characters 401 of FIG. 4) to be displayed in a view area (e.g., the view area 320 of FIG. 3, the view area 510 and the view area 530 of FIG. 5, the view area 1145) through the display (e.g., the display module 160 of FIG. 1). The method may include dividing the view area (e.g., the view area 320 of FIG. 3, the view area 510 and the view area 530 of FIG. 5, the view area 1145) into a plurality of subareas according to a size determined for each of the plurality of the subareas. The plurality of the subareas each may include areas for displaying (e.g., the display module 160 of FIG. 1) a number of characters defined by the size. The method may include determining one or more character codes corresponding to the plurality of the subareas respectively based on the character code array (e.g., the character code array 403 of FIG. 4). The method may include displaying (e.g., the display module 160 of FIG. 1) characters in the view area (e.g., the view area 320 of FIG. 3, the view area 510 and the view area 530 of FIG. 5, the view area 1145) based on one or more character codes corresponding to each of the plurality of the subareas divided according to the respective size determined for each of the plurality of the subareas.

In an embodiment, an operating method of an electronic device (e.g., the electronic device 101 of FIG. 1) may include acquiring a character code array (e.g., the character code array 403 of FIG. 4) including information (e.g., the characters 401 of FIG. 4) to be displayed in a view area (e.g., the view area 320 of FIG. 3, the view area 510 and the view area 530 of FIG. 5, the view area 1145) through a display (e.g., the display module 160 of FIG. 1). The method may include randomly determining a size for each of a plurality of subareas of the view area (e.g., the view area 320 of FIG. 3, the view area 510 and the view area 530 of FIG. 5, the view area 1145). The randomization process may enhance security by introducing unpredictability in the layout of displayed information. By randomly assigning sizes to the subareas, the system ensures that sensitive data cannot be easily reconstructed or reverse-engineered, even if memory data is accessed. The plurality of the subareas each may be defined to display (e.g., the display module 160 of FIG. 1) a number, defined by the size, of characters. The method may include dividing and displaying (e.g., the display module 160 of FIG. 1) a plurality of characters corresponding to the character code array in the plurality of the subareas.

In an embodiment, an operating method of an electronic device (e.g., the electronic device 101 of FIG. 1) may include, in response to a first user input, obtaining first information relating to characters to be displayed in a view area (e.g., the view area 320 of FIG. 3, the view area 510 and the view area 530 of FIG. 5, the view area 1145) on a display. (e.g., the display module 160 of FIG. 1). The method may include, based on the obtained first information, determining a plurality of subareas including a first subarea having a first size and a second subarea having a second size with respect to the view area (e.g., the view area 320 of FIG. 3, the view area 510 and the view area 530 of FIG. 5, the view area 1145). The method may include, based on the obtained first information, displaying a first number of first characters corresponding to the first size among the characters in the first subarea, and displaying a second number of second characters corresponding to the second size among the characters in the second subarea. The method may include, in response to a second user input, obtaining second information of the characters to be displayed in the view area (e.g., the view area 320 of FIG. 3, the view area 510 and the view area 530 of FIG. 5, the view area 1145) on the display (e.g., the display module 160 of FIG. 1). The method may include, based on the obtained second information, determining a plurality of subareas including a third subarea having a third size different from the first size and a fourth subarea having a fourth size different from the second size with respect to the view area (e.g., the view area 320 of FIG. 3, the view area 510 and the view area 530 of FIG. 5, the view area 1145). The method may include, based on the obtained second information, displaying a third number of characters corresponding to the third size among the characters in the third subarea, and displaying a fourth number of characters corresponding to the fourth size among the characters in the fourth subarea.

In an embodiment, a non-transitory computer readable recording medium may record a program which is executed by at least one processor (e.g., the processor 120 of FIG. 1) of an electronic device (e.g., the electronic device 101 of FIG. 1), to cause the electronic device (e.g., the electronic device 101 of FIG. 1) by carry out the aforementioned method.

An electronic device and an operating method thereof according to various embodiments may block an attacker hacking into memory from obtaining information listed on a screen.

Effects obtainable from the disclosure are not limited to the above-mentioned effects, and other effects which are not mentioned may be clearly understood by those skilled in the art of the technical field which the disclosure belongs to.

The methods according to the embodiments described in the claims or the specification of the disclosure may be implemented in software, hardware, or a combination of hardware and software.

In software implementation, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the embodiments described in the claims or the specification of the disclosure.

In the disclosure, a function or an operation performed by the electronic device may be performed by one or more processors executing one or more instructions stored in memory. The function or the operation of the electronic device mentioned in the disclosure may be carried out by one processor executing one or more instructions, or by a combination of a plurality of processors executing one or more instructions. The processor mentioned in the disclosure may be understood as including circuitry for performing computation or controlling other component of the electronic device. For example, the one or more processors may include a central processing unit (CPU), a micro-processor unit (MPU), an application processor (AP), a communication processor (CP), a neural processing unit (NPU), a system on chip (SoC) or an integrated circuit (IC) configured to execute one or more instructions. The one or more processors may be configured to perform the operation of the electronic devices described above.

In the disclosure, a program (software module, software) may be stored to a random access memory, a non-volatile memory including a flash memory, a read only memory (ROM), an electrically erasable programmable ROM (EEPROM), a magnetic disc storage device, a CD-ROM, digital versatile discs (DVDs) or other optical storage devices, and a magnetic cassette. Alternatively, it may be stored to memory combining part or all of those recording media. The memory may include one storage medium, or may include a combination of a plurality of storage media. The one or more instructions may be stored in a single storage medium, or may be distributed and stored in a plurality of storage media.

Also, the program may be stored in an attachable storage device accessible via a communication network such as internet, intranet, local area network (LAN), wide LAN (WLAN), or storage area network (SAN), or a communication network by combining these networks. Such a storage device may access a device which executes an embodiment of the disclosure through an external port. In addition, a separate storage device on the communication network may access the device which executes an embodiment of the disclosure.

In the specific embodiments of the disclosure, the component included in the disclosure is expressed in a singular or plural form. However, the singular or plural expression is appropriately selected according to a proposed situation for the convenience of explanation, the disclosure is not limited to a single component or a plurality of components, the components expressed in the plural form may be configured as a single component, and the components expressed in the singular form may be configured as a plurality of components.

In addition, a term such as "unit" or "module" in the disclosure may be a hardware component such as a processor or a circuit, and/or a software component executed by a hardware component such as a processor.

"unit" and "module" may be stored in an addressable storage medium and implemented by a program executable by the processor. For example, "unit" and "module" may be implemented by components such as software components, object-oriented software components, class components and task components, processes, functions, attributes, procedures, sub-routines, segments of program code, drivers, firmware, microcode, circuitry, data, databases, data structures, tables, arrays and variables.

Specific implementations described in this disclosure are merely an embodiment, and are not intended to limit the scope of the disclosure in any way. For the sake of brevity of the specification, disclosure of conventional electronic configurations, control systems, software, and other functional aspects of the systems may be omitted.

In addition, in the disclosure, "including at least one of a, b, or c" may indicate "including a alone, including b alone, including c alone, or including a combination of two or more (including a and b, including b and c, including a and c, or including all of a, b, and c).

Meanwhile, while the specific embodiment has been described in the detailed explanation of the disclosure, it will be noted that various modifications may be made without departing from the scope of the disclosure. Therefore, the scope of the disclosure is not limited and defined by the described embodiment and is defined by not only the scope of the claims as below but also their equivalents.

In the disclosure, the term "if" may be construed to mean "when" or "upon" or "in response to determining" or "in response to detecting," depending on the context. Similarly, "if it is determined" or "if [a stated condition or event] is detected" may be construed to mean, "upon determining" or "in response to determining" or "upon detecting [the stated condition or event]" or "in response to detecting [the stated condition or event]," selectively.

The device described so far may be implemented using hardware components, software components, and/or a combination of hardware components and software. For example, the device and the component described in the embodiments may be implemented using one or more general-purpose or special purpose computers, such as a processor, a controller, an arithmetic logic unit (ALU), a digital signal processor, a microcomputer, a field programmable array (FPGA), a programmable logic unit (PLU), a microprocessor or any other device for responding to and executing instructions. A processing device (or a processing circuit) may include an operating system (OS) and one or more software applications executable on the OS. Also, the processing device may also access, store, manipulate, process, and generate data in response to executing the software. For ease of understanding, the processing device is described using a single device, but those having ordinary skill in the art will appreciate that the processing device may include a plurality of processing elements and/or a plurality of types of processing elements. For example, the processing device may include a plurality of processors or one processor and one controller. In addition, other processing configuration such as a parallel processor is also possible.

Software may include a computer program, a code, an instruction, or a combination of one or more of them, and may configure the processing device to operate as desired or may instruct the processing device independently or collectively. Software and/or data may be embodied in any type of machine, a component, a physical device, a computer storage medium or a device to be interpreted by the processing device or to provide an instruction or data to the processing device. The software may also be distributed on a networked computer system, and stored or executed in a distributed manner. The software and data may be stored on one or more computer-readable recording media.

The method according to the embodiment may be implemented in the form of program instructions executable through various computer means and recorded on a computer-readable medium. At this time, the medium may permanently store a computer-executable program, or temporarily store for execution or downloading. In addition, the medium may be various recording means or storage means by coupling a single or multiple hardware, and may be distributed over a network, rather than being limited to a medium directly connected to any computer system. Examples of the medium may include magnetic media such as a hard disk, a floppy disk, and a magnetic tape, optical recording media such as a CD-ROM and a digital versatile disc (DVD), magneto-optical media such as a floptical disk, and a ROM, a random access memory (RAM), a flash memory and so on, configured to store program instructions. Further, examples of other medium may include an application store for distributing applications, a site for supplying or distributing various software, and a recording medium or storage medium managed by a server.

As above, although the embodiments have been described by the limited embodiment and drawings, those having ordinary knowledge in the art may make various modifications and variations from the above disclosure. For example, even if the described techniques are performed in a different order than the described method, and/or the components of the described system, structure, device, circuit, and so on are coupled or combined in a different form from the described method, or substituted or replaced by other components or equivalents, appropriate results may be achieved.

The following additional aspects of the present disclosure are also defined:
Aspect 1. The electronic device of any of the embodiments described above, wherein, An electronic device comprising: a display; at least one processor; and memory for storing instructions, when executed by the at least one processor, causing the electronic device to: in response to a first user input, obtain first information relating to characters to be displayed in a view area on the display, based on the obtained first information: determine a plurality of subareas comprising a first subarea having a first size and a second subarea having a second size with respect to the view area, and display a first number of first characters corresponding to the first size among the characters in the first subarea, and display a second number of second characters corresponding to the second size among the characters in the second subarea, in response to a second user input, obtain second information of the characters to be displayed in the view area on the display, and based on the obtained second information: determine a plurality of subareas comprising a third subarea having a third size different from the first size and a fourth subarea having a fourth size different from the second size with respect to the view area, and display a third number of characters corresponding to the third size among the characters in the third subarea, and display a fourth number of characters corresponding to the fourth size among the characters in the fourth subarea.
Aspect 2. The electronic device of Aspect 1, wherein, wherein the first user input comprises an input for displaying the mobile identification document based on an identification application which displays the mobile identification document, the second user input comprises an input for displaying the mobile identification document based on the identification application after displaying the mobile identification document corresponding to the first user input is ended, and the view area comprises an area defined to display information within the mobile identification document displayed by the identification application.
Aspect 3. The electronic device of any one of Aspect 1 or 2, further comprising: a communication circuit for communicating with an external device, wherein the instructions are executed by the at least one processor to cause the electronic device to: generate a private key and a public key corresponding to the private key, transmit the public key to an external server through the communication circuit, receive from the external server a secret key encrypted based on the public key, decrypt the encrypted secret key based on the private key, receive encrypted information from the external server, and obtain the first information or the second information by decrypting the encrypted information based on the secret key.
Aspect 4. The electronic device of any one of Aspect 1 to 3, wherein the second subarea is displayed in a first direction with respect to the first subarea, and the fourth subarea is displayed in the first direction with respect to the third subarea.
Aspect 5. The electronic device of Aspect 4, wherein the instructions, when executed by the at least one processor, cause the electronic device to: display in the first subarea the first number of the first characters from one end of a second direction opposite TO the first direction within AN array of the characters in the first subarea, and display in the third subarea the third number of the third characters from one end of the second direction within the array of the characters in the third subarea.
Aspect 6. The electronic device of Aspect 4, wherein the instructions, when executed by the at least one processor, cause the electronic device to: render the characters within the first subarea and then render the characters within the second subarea, and render the characters within the fourth subarea and then render the characters within the third subarea.
Aspect 7. An operating method of an electronic device, comprising: in response to a first user input, obtaining first information relating to characters to be displayed in a view area on a display, based on the obtained first information: determining a plurality of subareas comprising a first subarea having a first size and a second subarea having a second size with respect to the view area, and displaying a first number of first characters corresponding to the first size among the characters in the first subarea, and displaying a second number of second characters corresponding to the second size among the characters in the second subarea, in response to a second user input, obtaining second information of the characters to be displayed in the view area on the display; and based on the obtained second information: determining a plurality of subareas comprising a third subarea having a third size different from the first size and a fourth subarea having a fourth size different from the second size with respect to the view area, and displaying a third number of characters corresponding to the third size among the characters in the third subarea, and displaying a fourth number of characters corresponding to the fourth size among the characters in the fourth subarea.

## Claims

1. An electronic device comprising:
a display;
at least one processor; and
memory storing instructions, when executed by the at least one processor, causing the electronic device to:
based on a user input received through an application to display information, acquire a character code array corresponding to the information to be displayed on a view area through the display,
divide the view area into a plurality of subareas according to a determined size of each of the plurality of the subareas, each of the plurality of the subareas each for displaying a number of characters defined by the size,
determine one or more character codes corresponding to the plurality of the subareas respectively based on the character code array, and
display characters in the view area based on one or more character codes corresponding to each of the plurality of the subareas divided according to the respective size determined for each of the plurality of the subareas.

2. The electronic device of claim 1, wherein the application comprises an identification application for displaying a mobile identification document, and
the view area is defined to display the information in the mobile identification document displayed by the identification application.

3. The electronic device of claim 2, further comprising:
a communication circuit for communicating with an external device,
wherein the instructions are executed by the at least one processor to cause the electronic device to:
while executing the application, receive the user input for displaying the mobile identification document,
generate a private key and a public key corresponding to the private key based on receiving the user input,
transmit the public key to an external server through the communication circuit,
receive from the external server a secret key encrypted based on the public key,
decrypt the encrypted secret key based on the private key,
receive encrypted information from the external server, and
obtain the character code array by decrypting the encrypted information based on the secret key.

4. The electronic device of claim 3, wherein the application, when executed by the at least one processor, causes the electronic device to:
authenticate a user of the electronic device, and
request, to the external server, information based on a result of the authentication.

5. The electronic device of any one of claims 1 to 4, wherein the plurality of the subareas comprises a first subarea and a second subarea having an area size different from the first subarea, and
the instructions are executed by the at least one processor to cause the electronic device to display a first number of characters in the first subarea, and to display a second number, which is different from the first number, of characters different in the second subarea.

6. The electronic device of any one of claims 1 to 5, wherein the instructions are executed by the at least one processor to cause the electronic device to determine an order of rendering the plurality of the subareas, and
the one or more character codes are recorded in the memory based on the order of rendering the plurality of the subareas.

7. The electronic device of claim 6, wherein the instructions, when executed by the at least one processor, cause the electronic device to overwrite, in the memory, an area, where the character code array is stored, with dummy data after the characters are displayed on the display.

8. The electronic device of any one of claim 1 to 7, wherein the instructions, when executed by the at least one processor, cause the electronic device to:
determine whether the information to be displayed on the view area is designated as a subject to security,
when the information to be displayed on the view area is designated as the subject to security, divide the view area into the plurality of the subareas and render the characters to the plurality of the subareas, and
when the target information is not designated as the subject to security, render the characters in the view area by configuring the view area as a single area.

9. An electronic device comprising:
a display;
at least one processor; and
memory for storing instructions, when executed by the at least one processor, causing the electronic device to:
acquire a character code array comprising information to be displayed in a view area on the display, through an application,
randomly determine a size for each of a plurality of subareas of the view area, the plurality of the subareas each for displaying a number, defined by the size, of characters, and
divide and display a plurality of characters corresponding to the character code array in the plurality of the subareas.

10. The electronic device of claim 9, wherein the application comprises an identification application for displaying a mobile identification document, and
the view area is defined to display the information within the mobile identification document displayed by the identification application.

11. The electronic device of any one of claims 9 or 10, wherein the plurality of the subareas comprises a first subarea and a second subarea having a different area size from the first subarea, and
the instructions are executed by the at least one processor to cause the electronic device to display a first number of characters in the first subarea, and to display a second number of characters different from the first number in the second subarea.

12. An operating method of an electronic device, comprising:
based on a user input received through an application to display information, acquiring a character code array corresponding to the information to be displayed on a view area through the display;
dividing the view area into a plurality of subareas according to a determined size of each of the plurality of the subareas, each of the plurality of the subareas each for displaying a number of characters defined by the size;
determining one or more character codes corresponding to the plurality of the subareas respectively based on the character code array; and
displaying characters in the view area based on one or more character codes corresponding to each of the plurality of the subareas divided according to the respective size determined for each of the plurality of the subareas.

13. The operating method of claim 12, wherein the application comprises an identification application for displaying a mobile identification document, and
the view area is defined to display the information in the mobile identification document displayed by the identification application.

14. The operating method of any one of claim 12 or 13, wherein the method further comprising:
determining whether the information to be displayed on the view area is designated as a subject to security,
when the information to be displayed on the view area is designated as the subject to security, dividing the view area into the plurality of the subareas and render the characters to the plurality of the subareas, and
when the target information is not designated as the subject to security, rendering the characters in the view area by configuring the view area as a single area.

15. An operating method of an electronic device, comprising:
acquiring a character code array comprising information to be displayed in a view area through a display;
randomly determining a size for each of a plurality of subareas of the view area, the plurality of the subareas each for displaying a number, defined by the size, of characters; and
dividing and displaying a plurality of characters corresponding to the character code array in the plurality of the subareas.
